# EUROPEAN PATENT APPLICATION

(11) **EP 4 815 450 A1**
(43) Date of publication of application: **30.09.2026**
(21) Application number: 24918276.7
(22) Date of filing: 12.12.2024
(51) Int. Cl.: H04N 19/184

(54) **MULTIMEDIA METADATA ENCODING METHOD AND MULTIMEDIA METADATA DECODING METHOD**

(30) Priority: 16.01.2024 CN 202410064774
(71) Applicant: Huawei Technologies Co., Ltd., Shenzhen, Guangdong 518129 (CN)
(72) Inventor: XU, Weiwei, Shenzhen, Guangdong 518129 (CN); YU, Quanhe, Shenzhen, Guangdong 518129 (CN); WANG, Yichuan, Shenzhen, Guangdong 518129 (CN); YOU, Hongjie, Shenzhen, Guangdong 518129 (CN)
(74) Representative: Thun, Clemens
(86) International application number: PCT/CN2024/138885
(87) International publication number: WO 2025/152668

(57) **Abstract**

Embodiments of this application provide a method for encoding/decoding metadata of multimedia. The encoding method includes: first obtaining metadata of multimedia, where the metadata of the multimedia includes first data, and the first data is floating-point data; and then writing second data into a bitstream, where the second data is a representation form in which the first data is represented in a floating-point data format. In this way, it can be ensured that a floating-point number finally obtained by a decoder side is consistent with an original floating-point number of an encoder side, and there is no precision loss.

## Description

This application claims priority to Chinese Patent Application No. 202410064774.4, filed with the China National Intellectual Property Administration on January 16, 2024 and entitled "METHOD FOR ENCODING/DECODING METADATA OF MULTIMEDIA", which is incorporated herein by reference in its entirety.

### TECHNICAL FIELD

This application relates to the encoding/decoding field, and in particular, to a method for encoding/decoding metadata of multimedia.

### BACKGROUND

With development of multimedia (such as audios, videos, and images) from high definition to ultra-high definition, an amount of data of the multimedia increases accordingly, and a requirement for storage and a transmission bandwidth of the multimedia becomes increasingly high. Therefore, the multimedia is compressed (which may also be referred to as encoded) before being stored or transmitted, to reduce a memory space occupied by storage and the transmission bandwidth.

Generally, when the multimedia is encoded, metadata of the multimedia is also encoded. Then, encoded multimedia and encoded metadata of the multimedia may be encapsulated into a file (which may also be referred to as a bitstream). Then, the file (or the bitstream) is stored or transmitted.

Currently, in some scenarios, the metadata of the multimedia (for example, metadata of a high dynamic range (High Dynamic Range, HDR) image/video) includes a floating-point number. A solution in the conventional technology is as follows: In an encoding process, after a floating-point number is truncated to a specific length, the floating-point number is encapsulated into a file or a stream in a form of American standard code for information interchange (American Standard Code for Information Interchange, ASCII) character string; and in a decoding process, the character string is restored to a floating-point number.

For example, "0.131241241241..." is truncated to "0.1312412", and then, the character string "0.1312412" is represented in a form of extensible metadata platform (Extensible Metadata Platform, XMP) or an extensible markup language (Extensible Markup Language, XML) in a bitstream. In the decoding process, the character string "0.1312412" is converted back to a floating-point number 0.1312412. As a result, there is a loss in precision of the floating-point number in metadata, and the floating-point number finally obtained by a decoder side is inconsistent with an original floating-point number of an encoder side.

### SUMMARY

In view of this, this application provides a method for encoding/decoding metadata of multimedia. The encoding/decoding method can ensure that a floating-point number finally obtained at a decoder side is consistent with an original floating-point number at an encoder side, and there is no precision loss.

It should be noted that multimedia in this application may include but is not limited to an image, a video, and an audio.

For example, this application may be applied to various image service scenarios (for example, a cloud album) and various video/audio service scenarios (for example, live broadcasting and on-demand broadcasting). This is not limited in this application.

According to a first aspect, this application provides a method for encoding metadata of multimedia. The method includes: first obtaining metadata of multimedia, where the metadata of the multimedia includes first data, and the first data is floating-point data; and then writing second data into a bitstream, where the second data is a representation form in which the first data is represented in a floating-point data format.

For a specific syntax element, a codeword with a specified length is usually transmitted in a bitstream. Because a floating-point number is usually a number with high precision, in an existing standard, fixed-point conversion or conversion into another format (for example, an ASCII character string, where length truncation is involved in a conversion process) is performed in a process of encapsulating the syntax element, resulting in a precision loss. However, in this application, a floating-point number storage form (that is, a floating-point data format of the second data) in a computer memory is used in the bitstream for transmission. This can ensure that values of floating-point numbers stored in a memory of a transmitter and a memory of a receiver are completely consistent. In this way, the floating-point data obtained by a decoder side by converting the second data is the same as the first data used by an encoder side for encoding. This ensures that the floating-point number finally obtained by the decoder side is consistent with the original floating-point number of the encoder side.

In addition, because floating-point data in metadata of multimedia of the encoder side and the decoder side is consistent, in a scenario in which reconstructed multimedia needs to be generated based on the metadata of the multimedia or reconstructed multimedia content needs to be displayed based on the metadata of the multimedia, quality of the reconstructed multimedia or viewing experience during displaying of the reconstructed multimedia content can be improved.

For example, the floating-point type includes a 32-bit float type or a 64-bit double type.

For example, the floating-point data format is a data format, and specifies fields constituting floating-point data, a layout of the fields, and an arithmetic explanation.

For example, the first data is "0.125490203", that is, a mathematical representation of a floating-point number, and the second data may be "0X3E008081", that is, a binary representation of a floating-point number in a computer.

For example, there may be one or more pieces of first data, and there may be one or more pieces of second data. One piece of second data may be generated based on one piece of first data. In other words, a plurality of pieces of first data one-to-one correspond to a plurality of pieces of second data.

It should be understood that the metadata of the multimedia may further include other data other than the first data, and the other data in the metadata of the multimedia may be encoded/decoded by using a method in the conventional technology. This is not limited in this application. This application describes a process of encoding/decoding floating-point data in multimedia data.

It should be understood that the metadata of the multimedia may be metadata of an image, metadata of an audio, metadata of a video, or the like. This is not limited in this application.

For example, when the multimedia is an image or a video, the second data may be encapsulated based on an image encapsulation format, to obtain a bitstream. The image encapsulation format includes but is not limited to a JPEG JFIF encapsulation format, a JPEG universal metadata box format, a JUMBF encapsulation format, a high efficiency image file format (High Efficiency Image File Format, HEIF), an MP4 file format, and the like. This is not limited in this application.

For example, the second data is encapsulated based on the JPEG JFIF encapsulation format. The second data may be encapsulated into an APPN field in the JPEG JFIF encapsulation format.

For another example, the second data is encapsulated into a payload of APP11 JP in the JUMBF encapsulation format.

For another example, the second data may be encapsulated into a box (box) in the JUMBF encapsulation format.

For another example, the second data may be encapsulated into a box (box) in an HEIF encapsulation format, and the box may be 'idat' or the like.

For another example, the second data is encapsulated into supplemental enhancement information (Supplemental Enhancement Information, SEI) of HEVC or VVC, or a user-defined network abstract layer (Network Abstract Layer, NAL) unit, or a reserved NAL unit.

It should be understood that the second data may alternatively be encapsulated into a file location indicated by metadata location information (the metadata location information may be one type of data in the metadata of the multimedia), for example, a location after an EOI (end of image) of a complete JPEG file, or an end of a complete HEIF file. This is not limited in this application.

It should be understood that a file location of the second data in the bitstream is not limited in this application.

For example, a metadata structure of the multimedia is not limited in this application, for example, may be a metadata structure corresponding to 'tmap' in 23008-12 AMD 3.

For example, the second data may be written into the bitstream in a form of ASCII character string. For another example, the second data is written into the bitstream in a form of ASCII byte stream. It should be understood that a form in which the second data is written into the bitstream is not limited in this application.

According to the first aspect, the method further includes: generating the second data based on the first data.

According to any one of the first aspect or the implementations of the first aspect, the method further includes: obtaining the floating-point data format; and generating the second data based on the first data includes: processing the first data based on the floating-point data format, to obtain the second data.

Because the floating-point data format has a unified standard, after the encoder side processes the first data based on the floating-point data format to obtain the second data, the decoder side processes the second data based on the floating-point data format, to restore the first data. This can ensure that the floating-point number finally obtained by the decoder side is consistent with the original floating-point number of the encoder side.

For example, the first data may be converted into the second data based on the fields of the floating-point data, the layout of the fields, the arithmetic explanation, and a decimal-to-binary conversion manner that are specified by the floating-point data format.

In a possible implementation, the floating-point data format may be preset. In this way, the preset floating-point data format may be obtained.

In a possible implementation, the floating-point data format may be determined based on an application scenario, a channel condition, a quantity of significant bits of the first data, and the like.

According to any one of the first aspect or the implementations of the first aspect, the method further includes: obtaining a bit width of the second data; and processing the first data based on the floating-point data format, to obtain the second data includes: processing the first data based on the floating-point data format and the bit width, to obtain the second data.

For example, the bit width (bit width) may be a quantity of bits (bits) occupied by data in a computer system. The bit width may include at least one of the following: 8 bits, 16 bits, 19 bits, 32 bits, 64 bits, or the like. This is not limited in this application.

In a possible implementation, the bit width may be preset. In this way, the preset bit width may be obtained.

In a possible implementation, the bit width may be determined based on an application scenario, a channel condition, a quantity of significant bits of the first data, and the like.

Specifically, lengths of fields, specified by the floating-point data format for the bit width, of the floating-point data may be determined. Then, the first data may be converted into the second data based on the fields of the floating-point data specified by the floating-point data format, the lengths of the fields specified for the bit width, the layout of the fields, and the arithmetic explanation in the decimal-to-binary conversion manner.

According to any one of the first aspect or the implementations of the first aspect, the method further includes: writing the floating-point data format into the bitstream.

For example, when the floating-point data format is determined based on the application scenario, the channel condition, the quantity of significant bits of the first data, and the like, the floating-point data format may be written into the bitstream, so that the decoder side can obtain the floating-point data format, to convert the second data into the first data.

For example, when the floating-point data format is preset, and the encoder side and the decoder side synchronize the floating-point data format in advance, the floating-point data format may not need to be written into the bitstream. For example, when the floating-point data format is preset, but the encoder side and the decoder side do not synchronize the floating-point data format in advance, the floating-point data format may alternatively be written into the bitstream.

According to any one of the first aspect or the implementations of the first aspect, the method further includes: writing the bit width of the second data into the bitstream.

For example, when the bit width is determined based on the application scenario, the channel condition, the quantity of significant bits of the first data, and the like, the bit width of the second data may be written into the bitstream, so that the decoder side can obtain the bit width of the second data, to accurately obtain a single piece of second data by dividing a plurality of pieces of second data obtained by parsing the bitstream, and convert the second data into the first data.

For example, when the bit width is preset, and the encoder side and the decoder side synchronize the bit width in advance, the bit width of the second data may not need to be written into the bitstream. For example, when the bit width is preset, but the encoder side and the decoder side do not synchronize the bit width in advance, the bit width of the second data may alternatively be written into the bitstream.

It should be noted that, locations of the bit width, the floating-point data format, and the second data in the bitstream are not limited in this application. In a possible implementation, the bit width in the bitstream is located after the floating-point data format, and the second data is located after the bit width.

According to any one of the first aspect or the implementations of the first aspect, the second data is a binary representation form or a hexadecimal representation form in which the first data is represented in the floating-point data format.

In a possible implementation, after the first data is processed based on the floating-point data format and the bit width to obtain binary data, the binary data may be directly used as the second data. In a possible implementation, after the first data is processed based on the floating-point data format and the bit width to obtain binary data, the binary data may be converted into hexadecimal data, and the hexadecimal data is used as the second data.

For example, when the first data is "0.125490203" and a bit width of the second data is 32, the second data may be a hexadecimal representation in which the first data is represented in an IEEE 754 format, that is, "0X3E008081".

For example, when the first data is "0.35", and a bit width of the second data is 32, the second data may be a binary representation in which the first data is represented in an IEEE 754 format, that is, "01000000010100000000000000000000".

According to any one of the first aspect or the implementations of the first aspect, the metadata of the multimedia is metadata of a high dynamic range HDR image.

For example, the metadata of the HDR image may include dynamic metadata and static metadata. The dynamic metadata may be data that changes with time, and the static metadata may be data that does not change with time.

According to any one of the first aspect or the implementations of the first aspect, the metadata of the multimedia is metadata of enhanced data, and the enhanced data is generated based on a standard dynamic range (Standard Dynamic Range, SDR) image and an HDR image.

The metadata of the enhanced data is data that is generated in a process of performing difference calculation on a base image and a first image to generate the enhanced data and that affects a difference calculation result (that is, the enhanced data). In a possible case, the base image is an SDR image, and the first image is an HDR image. In a possible case, the base image is an HDR image, and the first image is an SDR image.

In this case, the bitstream may include an encoded base image and encoded enhanced data. After receiving the bitstream, the decoder side may decode the bitstream to obtain a reconstructed image of the base image, a reconstruction result of the enhanced data, and reconstructed metadata of the enhanced data. When the base image is an SDR image and the first image is an HDR image, if the decoder side supports displaying of the HDR image, the reconstructed image of the base image and the reconstruction result of the enhanced data may be composed based on the reconstructed metadata of the enhanced data, to obtain a reconstructed HDR image; or if the decoder side supports displaying of only the SDR image, the reconstructed image of the base image may be displayed. When the base image is an HDR image and the first image is an SDR image, if the decoder side supports displaying of only the SDR image, the reconstructed image of the base image and the reconstruction result of the enhanced data may be composed based on the reconstructed metadata of the enhanced data, to obtain a reconstructed SDR image; or if the decoder side supports displaying of the HDR image, the reconstructed image of the base image may be displayed. In this way, compatibility with formats supported by different systems can be implemented.

In this application, a manner of encoding/decoding the reconstructed metadata of the enhanced data does not cause a loss in precision of the reconstructed metadata of the enhanced data, and the reconstructed metadata of the enhanced data obtained by the decoder side is the same as the metadata of the enhanced data encoded by the encoder side, so that quality of an SDR image or an HDR image obtained by the decoder side can be ensured.

According to any one of the first aspect or the implementations of the first aspect, the metadata of the multimedia may be metadata of audio data or metadata of image/video data in another format. This is not limited in this application.

According to any one of the first aspect or the implementations of the first aspect, the floating-point data format includes at least one of the following: IEEE 754, FP8 (E4M3), FP8 (E5M2), Bfloat16, or TensorFloat-32.

For example, the second data is encapsulated based on the JPEG JFIF encapsulation format. The second data may be encapsulated into an APPN field in the JPEG JFIF encapsulation format.

According to any one of the first aspect or the implementations of the first aspect, the bit width of the second data is greater than or equal to a bit width of the first data. A floating-point number physically stored in a computer is mostly in a form of exponent bit and fraction bit. A floating-point number format represented by a small quantity of exponent bits and fraction bits (for example, 16 bits) can be losslessly converted into a floating-point number format represented by a large quantity of exponent bits and fraction bits (for example, 32 bits). In this application, the bit width of the second data is limited to be greater than or equal to the bit width of the first data, to ensure lossless conversion from the first data to the second data, so as to ensure lossless transmission of the metadata.

According to a second aspect, this application provides a bitstream. The bitstream is generated according to any one of the first aspect or the implementations of the first aspect.

Any one of the second aspect and the implementations of the second aspect corresponds to any one of the first aspect and the implementations of the first aspect. For technical effect corresponding to any one of the second aspect and the implementations of the second aspect, refer to technical effect corresponding to any one of the first aspect and the implementations of the first aspect. Details are not described herein again.

According to a third aspect, this application provides a bitstream. The bitstream includes second data, the second data is a representation form in which first data is represented in a floating-point data format, and the first data is floating-point data in metadata of multimedia.

According to the third aspect, the bitstream further includes the floating-point data format.

According to the third aspect, the second data is obtained by processing the first data based on the floating-point data format and a bit width, and the bitstream further includes the bit width.

For example, when metadata of multimedia is metadata of enhanced data, the bitstream may further include an encoded base image and encoded enhanced data.

Any one of the third aspect and the implementations of the third aspect corresponds to any one of the first aspect and the implementations of the first aspect. For technical effect corresponding to any one of the third aspect and the implementations of the third aspect, refer to technical effect corresponding to any one of the first aspect and the implementations of the first aspect. Details are not described herein again.

According to a fourth aspect, this application provides a method for decoding metadata of multimedia. The method includes: first receiving a bitstream; next, parsing the bitstream to obtain second data, where the second data is a representation form in which first data is represented in a floating-point data format, and the first data is floating-point data in metadata of multimedia; and then generating the first data based on the second data.

For example, the second data may be obtained by parsing the bitstream from an image encapsulation format.

For example, the second data may be obtained through parsing from a JPEG JFIF encapsulation format. For example, the second data is obtained through parsing from an APPN field in the JPEG JFIF encapsulation format.

For another example, the second data may be obtained through parsing from a JUMBF encapsulation format. For example, the second data may be obtained through parsing from a payload of APP11 JP in the JUMBF encapsulation format. For another example, the second data may be obtained through parsing from a box in the JUMBF encapsulation format.

For another example, the second data is obtained through parsing from an HEIF encapsulation format. For example, the second data may be obtained through parsing from a box in the HEIF encapsulation format. For another example, the second data may be obtained through parsing from an 'idat' box in the HEIF encapsulation format.

For another example, the second data is obtained through parsing from an SEI of HEVC or VVC, or a user-defined NAL unit, or a reserved NAL unit.

It should be understood that metadata location information (the metadata location information may be one type of data in the metadata of the multimedia, and indicates a file location of the metadata of the multimedia) may further be obtained by parsing the bitstream; and then, the second data is obtained through parsing from a file location (for example, a location after an EOI (end of image) of a complete JPEG file, or an end of a complete HEIF file, which is not limited in this application) indicated by the metadata location information in the bitstream.

It should be understood that a decoder side may alternatively obtain the second data through parsing from another file location in the bitstream. This is not limited in this application.

According to the fourth aspect, the method further includes: obtaining the floating-point data format; and generating the first data based on the second data includes: processing the second data based on the floating-point data format, to obtain the first data.

According to any one of the fourth aspect or the implementations of the fourth aspect, obtaining the floating-point data format includes: parsing the bitstream to obtain the floating-point data format.

In a possible implementation, when the decoder side fails to obtain the floating-point data format by parsing the bitstream, a preset floating-point data format may be obtained.

According to any one of the fourth aspect or the implementations of the fourth aspect, the method further includes: obtaining a bit width of the second data; and processing the second data based on the floating-point data format, to obtain the first data includes: processing the second data based on the floating-point data format and the bit width, to obtain the first data.

According to any one of the fourth aspect or the implementations of the fourth aspect, obtaining the bit width of the second data includes: parsing the bitstream to obtain the bit width.

In a possible implementation, when the decoder side fails to obtain the bit width by parsing the bitstream, a preset bit width may be obtained.

According to any one of the fourth aspect or the implementations of the fourth aspect, the second data is a binary representation form or a hexadecimal representation form in which the first data is represented in the floating-point data format.

According to any one of the fourth aspect or the implementations of the fourth aspect, the metadata of the multimedia is metadata of a high dynamic range HDR image.

According to any one of the fourth aspect or the implementations of the fourth aspect, the metadata of the multimedia is metadata of enhanced data, and the enhanced data is determined based on a standard dynamic range SDR image and a high dynamic range HDR image.

According to any one of the fourth aspect or the implementations of the fourth aspect, the floating-point data format includes at least one of the following: IEEE 754, FP8 (E4M3), FP8 (E5M2), Bfloat16, or TensorFloat-32.

Any one of the fourth aspect and the implementations of the fourth aspect corresponds to any one of the first aspect and the implementations of the first aspect. For technical effect corresponding to any one of the fourth aspect and the implementations of the fourth aspect, refer to technical effect corresponding to any one of the first aspect and the implementations of the first aspect. Details are not described herein again.

According to a fifth aspect, this application provides an encoding apparatus. The encoding apparatus includes:
a metadata obtaining module, configured to obtain metadata of multimedia, where the metadata of the multimedia includes first data, and the first data is floating-point data; and
a data writing module, configured to write second data into a bitstream, where the second data is a representation form in which the first data is represented in a floating-point data format.

For example, the encoding apparatus may be configured to perform the method according to any one of the first aspect or the possible implementations of the first aspect.

Any one of the fifth aspect and the implementations of the fifth aspect corresponds to any one of the first aspect and the implementations of the first aspect. For technical effect corresponding to any one of the fifth aspect and the implementations of the fifth aspect, refer to technical effect corresponding to any one of the first aspect and the implementations of the first aspect. Details are not described herein again.

According to a sixth aspect, this application provides a decoding apparatus. The decoding apparatus includes:
a bitstream receiving module, configured to receive a bitstream;
a parsing module, configured to parse the bitstream to obtain second data, where the second data is a representation form in which first data is represented in a floating-point data format, and the first data is floating-point data in metadata of multimedia; and
a second data generation module, configured to generate the first data based on the second data.

For example, the decoding apparatus may be configured to perform the method according to any one of the fourth aspect or the possible implementations of the fourth aspect.

Any one of the sixth aspect and the implementations of the sixth aspect corresponds to any one of the fourth aspect and the implementations of the fourth aspect. For technical effect corresponding to any one of the sixth aspect and the implementations of the sixth aspect, refer to technical effect corresponding to any one of the fourth aspect and the implementations of the fourth aspect. Details are not described herein again.

According to a seventh aspect, this application provides an encoder, including a memory and a processor, where the memory is coupled to the processor, the memory stores program instructions, and when the program instructions are executed by the processor, the encoder is enabled to perform the method according to any one of the first aspect or the possible implementations of the first aspect.

Any one of the seventh aspect and the implementations of the seventh aspect corresponds to any one of the first aspect and the implementations of the first aspect. For technical effect corresponding to any one of the seventh aspect and the implementations of the seventh aspect, refer to technical effect corresponding to any one of the first aspect and the implementations of the first aspect. Details are not described herein again.

According to an eighth aspect, this application provides a decoder, including a memory and a processor, where the memory is coupled to the processor, the memory stores program instructions, and when the program instructions are executed by the processor, the decoder is enabled to perform the method according to any one of the fourth aspect or the possible implementations of the fourth aspect.

Any one of the eighth aspect and the implementations of the eighth aspect corresponds to any one of the fourth aspect and the implementations of the fourth aspect. For technical effect corresponding to any one of the eighth aspect and the implementations of the eighth aspect, refer to technical effect corresponding to any one of the fourth aspect and the implementations of the fourth aspect. Details are not described herein again.

According to a ninth aspect, this application provides a coder, including a memory and a processor, where the memory is coupled to the processor, the memory stores program instructions, and when the program instructions are executed by the processor, the coder is enabled to perform the method according to any one of the first aspect or the possible implementations of the first aspect.

Any one of the ninth aspect and the implementations of the ninth aspect corresponds to any one of the first aspect and the implementations of the first aspect. For technical effect corresponding to any one of the ninth aspect and the implementations of the ninth aspect, refer to technical effect corresponding to any one of the first aspect and the implementations of the first aspect. Details are not described herein again.

According to a tenth aspect, this application provides a coder, including a memory and a processor, where the memory is coupled to the processor, the memory stores program instructions, and when the program instructions are executed by the processor, the coder is enabled to perform the method according to any one of the fourth aspect or the possible implementations of the fourth aspect.

Any one of the tenth aspect and the implementations of the tenth aspect corresponds to any one of the fourth aspect and the implementations of the fourth aspect. For technical effect corresponding to any one of the tenth aspect and the implementations of the tenth aspect, refer to technical effect corresponding to any one of the fourth aspect and the implementations of the fourth aspect. Details are not described herein again.

According to an eleventh aspect, this application provides a chip, including one or more interface circuits and one or more processors, where the one or more processors receive or send data via the one or more interface circuits, and when the one or more processors execute computer instructions, any one of the first aspect and the implementations of the first aspect is performed.

Any one of the eleventh aspect and the implementations of the eleventh aspect corresponds to any one of the first aspect and the implementations of the first aspect. For technical effect corresponding to any one of the eleventh aspect and the implementations of the eleventh aspect, refer to technical effect corresponding to any one of the first aspect and the implementations of the first aspect. Details are not described herein again.

According to a twelfth aspect, this application provides a chip, including one or more interface circuits and one or more processors, where the one or more processors receive or send data via the one or more interface circuits, and when the one or more processors execute computer instructions, any one of the fourth aspect and the implementations of the fourth aspect is performed.

Any one of the twelfth aspect and the implementations of the twelfth aspect corresponds to any one of the fourth aspect and the implementations of the fourth aspect. For technical effect corresponding to any one of the twelfth aspect and the implementations of the twelfth aspect, refer to technical effect corresponding to any one of the fourth aspect and the implementations of the fourth aspect. Details are not described herein again.

According to a thirteenth aspect, this application provides a computer-readable storage medium. The computer-readable storage medium stores a computer program. When the computer program is run on a computer or a processor, the computer or the processor is enabled to perform the method according to any one of the first aspect or the possible implementations of the first aspect.

Any one of the thirteenth aspect and the implementations of the thirteenth aspect corresponds to any one of the first aspect and the implementations of the first aspect. For technical effect corresponding to any one of the thirteenth aspect and the implementations of the thirteenth aspect, refer to technical effect corresponding to any one of the first aspect and the implementations of the first aspect. Details are not described herein again.

According to a fourteenth aspect, this application provides a computer-readable storage medium. The computer-readable storage medium stores a computer program. When the computer program is run on a computer or a processor, the computer or the processor is enabled to perform the method according to any one of the fourth aspect or the possible implementations of the fourth aspect.

Any one of the fourteenth aspect and the implementations of the fourteenth aspect corresponds to any one of the fourth aspect and the implementations of the fourth aspect. For technical effect corresponding to any one of the fourteenth aspect and the implementations of the fourteenth aspect, refer to technical effect corresponding to any one of the fourth aspect and the implementations of the fourth aspect. Details are not described herein again.

According to a fifteenth aspect, this application provides a computer program product. The computer program product includes computer instructions. When the computer instructions are executed by a computer or a processor, the computer or the processor is enabled to perform the method according to any one of the first aspect or the possible implementations of the first aspect.

Any one of the fifteenth aspect and the implementations of the fifteenth aspect corresponds to any one of the first aspect and the implementations of the first aspect. For technical effect corresponding to any one of the fifteenth aspect and the implementations of the fifteenth aspect, refer to technical effect corresponding to any one of the first aspect and the implementations of the first aspect. Details are not described herein again.

According to a sixteenth aspect, this application provides a computer program product. The computer program product includes computer instructions. When the computer instructions are executed by a computer or a processor, the computer or the processor is enabled to perform the method according to any one of the fourth aspect or the possible implementations of the fourth aspect.

Any one of the sixteenth aspect and the implementations of the sixteenth aspect corresponds to any one of the fourth aspect and the implementations of the fourth aspect. For technical effect corresponding to any one of the sixteenth aspect and the implementations of the sixteenth aspect, refer to technical effect corresponding to any one of the fourth aspect and the implementations of the fourth aspect. Details are not described herein again.

According to a seventeenth aspect, this application provides a computer-readable storage medium. The computer-readable storage medium stores the bitstream according to any one of the third aspect or the implementations of the third aspect.

Any one of the seventeenth aspect and the implementations of the seventeenth aspect corresponds to any one of the third aspect and the implementations of the third aspect. For technical effect corresponding to any one of the seventeenth aspect and the implementations of the seventeenth aspect, refer to technical effect corresponding to any one of the third aspect and the implementations of the third aspect. Details are not described herein again.

According to an eighteenth aspect, this application provides a bitstream storage apparatus, where the apparatus includes a receiver and at least one storage medium, the receiver is configured to receive a bitstream, and the at least one storage medium is configured to store the bitstream according to any one of the third aspect or the implementations of the third aspect.

Any one of the eighteenth aspect and the implementations of the eighteenth aspect corresponds to any one of the third aspect and the implementations of the third aspect. For technical effect corresponding to any one of the eighteenth aspect and the implementations of the eighteenth aspect, refer to technical effect corresponding to any one of the third aspect and the implementations of the third aspect. Details are not described herein again.

According to a nineteenth aspect, this application provides a bitstream transmission apparatus. The apparatus includes a transmitter and at least one storage medium. The at least one storage medium is configured to store the bitstream according to any one of the third aspect or the implementations of the third aspect. The transmitter is configured to: obtain the bitstream from the storage medium, and send the bitstream to a terminal-side device via a transmission medium.

Any one of the nineteenth aspect and the implementations of the nineteenth aspect corresponds to any one of the third aspect and the implementations of the third aspect. For technical effect corresponding to any one of the nineteenth aspect and the implementations of the nineteenth aspect, refer to technical effect corresponding to any one of the third aspect and the implementations of the third aspect. Details are not described herein again.

According to a twentieth aspect, this application provides a bitstream delivery system, where the system includes: at least one storage medium, configured to store the bitstream according to any one of the third aspect or the implementations of the third aspect; and a streaming media device, configured to: obtain a target bitstream from the at least one storage medium, and send the target bitstream to a terminal-side device, where the streaming media device includes a content server or a content delivery server.

Any one of the twentieth aspect and the implementations of the twentieth aspect corresponds to any one of the third aspect and the implementations of the third aspect. For technical effect corresponding to any one of the twentieth aspect and the implementations of the twentieth aspect, refer to technical effect corresponding to any one of the third aspect and the implementations of the third aspect. Details are not described herein again.

### BRIEF DESCRIPTION OF DRAWINGS

FIG. 1A illustrates a diagram of an application scenario;
FIG. 1B illustrates a diagram of an end-to-end process of an HDR video;
FIG. 1C illustrates a diagram of a process of encoding an image and metadata of the image;
FIG. 1D illustrates a diagram of a process of decoding an image and metadata of the image;
FIG. 2 illustrates a diagram of a process 200 of encoding metadata;
FIG. 3 illustrates a diagram of a process 300 of decoding metadata;
FIG. 4A illustrates a diagram of a process 400 of encoding metadata;
FIG. 4B(1) and FIG. 4B(2) illustrate diagrams of floating-point data formats;
FIG. 4C(1) and FIG. 4C(2) illustrate diagrams of floating-point data formats;
FIG. 5A illustrates a diagram of a structure of a bitstream;
FIG. 5B illustrates a diagram of a structure of a bitstream;
FIG. 5C illustrates a diagram of a structure of a bitstream;
FIG. 5D illustrates a diagram of a structure of a bitstream;
FIG. 6 illustrates a diagram of a process 600 of decoding metadata;
FIG. 7 illustrates a diagram of a process 700 of encoding an image and metadata of the image;
FIG. 8 illustrates a diagram of a process 800 of decoding an image and metadata of the image;
FIG. 9 illustrates a diagram of a process 900 of decoding an image and metadata of the image;
FIG. 10 illustrates a diagram of an encoding apparatus 1000;
FIG. 11 illustrates a diagram of a decoding apparatus 1100;
FIG. 12 is a block diagram of an encoding/decoding system to which an embodiment of this application is applied;
FIG. 13A is a block diagram of a content supply system for implementing a content delivery service to which an embodiment of this application is applied;
FIG. 13B is a diagram of an example structure of a terminal device 2106 in FIG. 13A;
FIG. 14A is a diagram of an operating procedure of a streaming media system to which an embodiment of this application is applied;
FIG. 14B is a diagram of an architecture of a streaming media system to which an embodiment of this application is applied;
FIG. 15A is a diagram of a possible system architecture to which an embodiment of this application is applicable;
FIG. 15B is a diagram of a structure of an image processing system according to an embodiment of this application; and
FIG. 16 illustrates a diagram of a structure of an apparatus.

### DESCRIPTION OF EMBODIMENTS

The following clearly and completely describes the technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used for distinguishing between different target objects, but are not used for describing a specific order of the target objects.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In descriptions of embodiments of this application, unless otherwise stated, "plurality of" means two or more than two. For example, a plurality of processing units mean two or more processing units, and a plurality of systems mean two or more systems.

For example, multimedia in this application may include but is not limited to an image, a video, and an audio.

For example, this application may be applied to various image service scenarios (for example, a photo taken by a mobile phone or a cloud album) and various video/audio service scenarios (for example, live broadcasting and on-demand broadcasting). This is not limited in this application. In this application, an example in which the multimedia is an image is used for description.

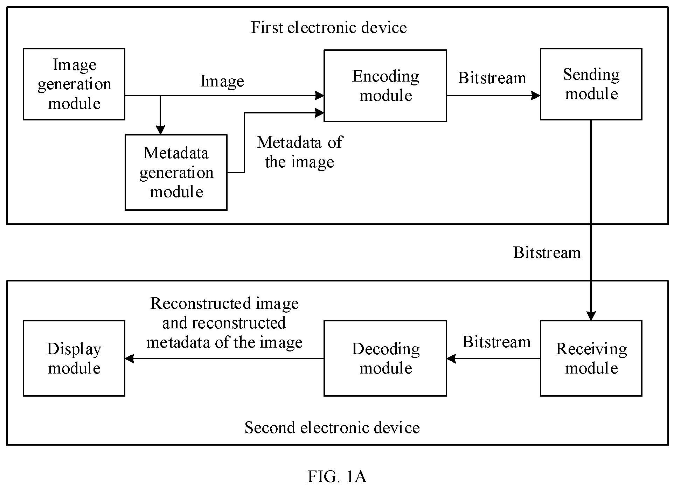

FIG. 1A illustrates a diagram of an application scenario.

Refer to FIG. 1A. For example, a first electronic device may include an image generation module, a metadata generation module, an encoding module (or an encoder), and a sending module.

For example, the encoding module may be a software module, or may be a hardware module. This is not limited in this application.

For example, the image generation module may include but is not limited to an image capture module, an image editing module, and the like. This is not limited in this application.

It should be understood that FIG. 1A is merely an example of the first electronic device. The first electronic device in some other embodiments of this application has more or fewer modules than those shown in FIG. 1A. This is not limited in this application.

Refer to FIG. 1A. For example, a second electronic device may include a display module, a decoding module (or a decoder), and a receiving module. For example, the decoding module may be a software module, or may be a hardware module. This is not limited in this application. It should be understood that FIG. 1A is merely an example of the second electronic device. The second electronic device in some other embodiments of this application has more modules than those shown in FIG. 1A. This is not limited in this application.

Still refer to FIG. 1A. For example, after generating an image, the image generation module of the first electronic device may output the generated image to the encoding module and the metadata generation module. Then, the metadata generation module may generate metadata of the image, and output the metadata of the image to the encoding module. Then, the encoding module may encode the image and the metadata of the image to obtain a bitstream (the bitstream may also be referred to as a bitstream, a bit stream, or a file), and output the bitstream obtained through encoding to the sending module. Then, the sending module may send the bitstream to the second electronic device. After receiving the bitstream, the receiving module of the second electronic device may output the bitstream to the decoding module. Then, the decoding module may decode the bitstream to obtain a reconstructed image and reconstructed metadata of the image, and output the reconstructed image and the reconstructed metadata of the image to the display module. The display module displays the reconstructed image based on the reconstructed metadata of the image.

For example, the first electronic device includes but is not limited to: a server, a PC (Personal Computer, personal computer), a notebook computer, a tablet computer, a mobile phone, and a watch.

For example, the second electronic device includes but is not limited to a PC, a notebook computer, a tablet computer, a mobile phone, and a watch.

For example, when the first electronic device is configured to perform encoding and the second electronic device is configured to perform decoding, the first electronic device may be referred to as an encoder side, and the second electronic device may be referred to as a decoder side. When the second electronic device is configured to perform encoding and the first electronic device is configured to perform decoding, the second electronic device may be referred to as an encoder side, and the first electronic device may be referred to as a decoder side.

In a possible implementation, the image encoded by the first electronic device in FIG. 1A may be an HDR image. For ease of understanding, an SDR and an HDR are first described.

A dynamic range (Dynamic Range) indicates a ratio of a maximum value to a minimum value of a variable in a plurality of fields. For a digital image, a dynamic range indicates a ratio of a maximum grayscale value to a minimum grayscale value in a range in which the image can be displayed. A dynamic range in nature is quite large. Luminance of a night scene under the starry sky is about 0.001 cd/m², luminance of the sun is up to 1,000,000,000 cd/m², and this dynamic range can reach an order of magnitude of 1,000,000,000/0.001=10¹³. However, in a real scene in nature, the luminance of the sun and the luminance of the stars are not obtained at the same time. For a natural scene in the real world, a dynamic range is from 10⁻³ to 10⁶. Currently, in most color digital images, each of R, G, and B channels uses one byte of eight bits for storage. In other words, a representation range of each channel is from 0 to 255 grayscale levels, where 0 to 255 herein is a dynamic range of the image. In the real world, a dynamic range of a same scene is from 10⁻³ to 10⁶ and is referred to as a high dynamic range (high dynamic range, HDR), and relatively, a dynamic range of a common image is a low dynamic range (low dynamic range, LDR). An imaging process of a digital camera is actually mapping from the high dynamic range of the real world to a low dynamic range of a photo.

A standard dynamic range image corresponds to a high dynamic range image. An 8-bit image in a format like JPEG that is conventionally used may be considered as a standard dynamic range image. Before a camera that can shoot an HDR image appears, a conventional camera can record photographed light information within a specific range only by controlling an exposure value. Maximum illuminance information of the display device cannot reach luminance information of the real world, and images are viewed on the display device. Therefore, an optical-electro transfer function is required. An earlier display device is a cathode ray tube (Cathode Ray Tube, CRT) display, and an optical-electro transfer function of the cathode ray tube display is a gamma function. The optical-electro transfer function based on the "gamma" function is defined in the ITU-R Recommendation BT.1886 standard.

However, with upgrade of the display device, an illuminance range of the display device increases continuously. Illuminance information of an existing consumer-level HDR display is 600 cd/m², and illuminance information of a high-end HDR display is 2,000 cd/m², which is far beyond illuminance information of an SDR display device. An optical-electro transfer function in the ITU-R Recommendation BT.1886 standard cannot well express display performance of an HDR display device. Therefore, an improved electro-optical transfer function is required to adapt to the upgrade of the display device. An idea of the optical-electro transfer function comes from a mapping function in a tone mapping algorithm, and the mapping function is appropriately adjusted to form the optical-electro transfer function. Currently, there are three common optical-electro transfer functions: a perception quantization (Perception Quantization, PQ) function, a gamma (gamma) function, a logarithm (logarithm, log) function, a hybrid log-gamma (Hybrid Log-Gamma, HLG) function, and the like. The three optical-electro transfer functions are transfer functions specified in an AVS standard.

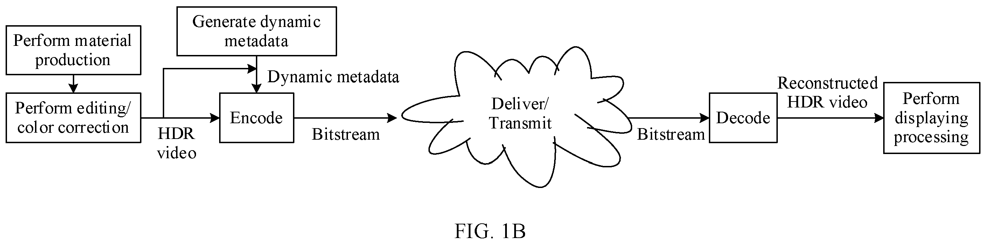

If better experience needs to be obtained for an HDR image and video, an end-to-end process is required. Refer to FIG. 1B. FIG. 1B describes an end-to-end process of an HDR video.

Because a dynamic range of the image capture module in a specific photographing state is fixed, to obtain an image with a higher dynamic range, a plurality of images with different exposure values are usually captured at a same moment, and the plurality of images with the different exposure values are composed to obtain an image with a higher dynamic range, namely, an HDR image. A bit width of the obtained HDR image is usually greater than 10 bits, to accommodate a scene with a high dynamic range.

Refer to FIG. 1B. For example, material production may be a process in which the plurality of images with the different exposure values captured at the same moment are composed to obtain an HDR image and temporally consecutive HDR images are composed to obtain a raw HDR video. The raw HDR video obtained through material production may be referred to as a material.

Then, an HDR image/video production module of the image generation module may perform processing such as editing/color correction on the material, to obtain a final HDR video (that is, a master (work)). Then, the metadata generation module may generate dynamic metadata based on the final HDR video. Then, the encoding module may encode the HDR video and the dynamic metadata to obtain a bitstream, and deliver/transmit the bitstream through a network. After receiving the bitstream, the decoder side may invoke the decoding module to decode the bitstream, to obtain a reconstructed HDR video and reconstructed dynamic metadata. Then, the display module may display the reconstructed HDR video based on the reconstructed dynamic metadata.

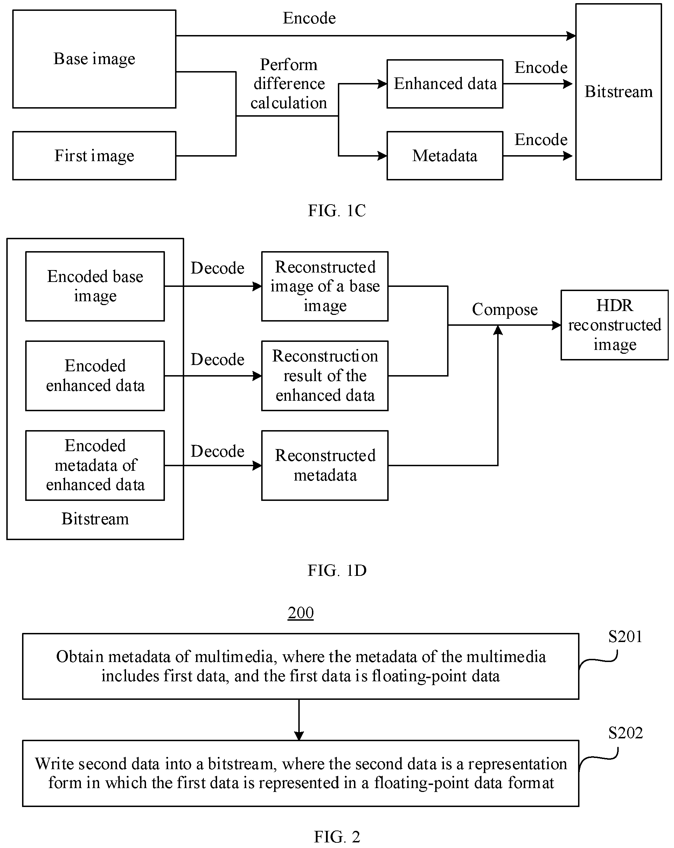

However, some encoding/decoding standards can support encoding/decoding of only images with a bit width of 10 bits at most. Therefore, encoding/decoding of an HDR image cannot be implemented. In addition, a standard dynamic range (Standard Dynamic Range, SDR) transcoding apparatus cannot encapsulate metadata of the HDR image into a bitstream of an SDR image. As a result, a terminal device that receives the SDR bitstream cannot restore the HDR image. In view of this, this application provides a method for encoding/decoding an image and metadata of the image. Refer to FIG. 1C and FIG. 1D.

FIG. 1C illustrates a diagram of a process of encoding an image and metadata of the image.

Refer to FIG. 1C. For example, an encoder side may use an SDR image as a base image, and use an HDR image as a first image; or use an HDR image as a base image, and use an SDR image as a first image. This is not limited in this application. Next, difference calculation may be performed on the base image and the first image to obtain enhanced data and metadata. Then, the base image, the enhanced data, and the metadata may be encoded to obtain a bitstream.

FIG. 1D illustrates a diagram of a process of decoding an image and metadata of the image.

Refer to FIG. 1D. For example, after receiving a bitstream, a decoder side may decode the bitstream to obtain a reconstructed image of a base image, a reconstruction result of enhanced data, and reconstructed metadata. When the base image is an SDR image and a first image is an HDR image, if the decoder side supports displaying of the HDR image, the reconstructed image of the base image and the reconstruction result of the enhanced data may be composed based on the reconstructed metadata, to obtain a reconstructed HDR image; or if the decoder side supports displaying of only the SDR image, the reconstructed image of the base image may be displayed. When the base image is an HDR image and a first image is an SDR image, if the decoder side supports displaying of only the SDR image, the reconstructed image of the base image and the reconstruction result of the enhanced data may be composed based on the reconstructed metadata, to obtain a reconstructed SDR image; or if the decoder side supports displaying of the HDR image, the reconstructed image of the base image may be displayed.

In this way, compatibility with formats supported by different systems can be implemented.

The following describes a process of encoding/decoding metadata.

FIG. 2 illustrates a diagram of a process 200 of encoding metadata.

S201: Obtain metadata of multimedia, where the metadata of the multimedia includes first data, and the first data is floating-point data.

In a possible implementation, the metadata of the multimedia may be metadata of enhanced data. The metadata of the enhanced data is data that is generated in a process of performing difference calculation on a base image and a first image to generate the enhanced data and that affects a difference calculation result (that is, the enhanced data). Details are described in subsequent embodiments.

In a possible implementation, the metadata of the multimedia may be metadata of an HDR image, and may include dynamic metadata and static metadata. The dynamic metadata may be data that changes with time, and the static metadata may be data that does not change with time.

It should be understood that the metadata of the multimedia may alternatively be metadata of another image, metadata of an audio, metadata of a video, or the like. This is not limited in this application.

For example, the metadata of the multimedia may include first data, and the first data may be floating-point (including 32-bit float or 64-bit double) data. For example, the first data is "0.125490203".

It should be understood that the metadata of the multimedia may further include other data other than the first data, and the other data in the metadata of the multimedia may be encoded/decoded by using a method in the conventional technology. This is not limited in this application. This application describes a process of encoding/decoding floating-point data in multimedia data.

For example, there may be one or more pieces of first data.

S202: Write second data into a bitstream, where the second data is a representation form in which the first data is represented in a floating-point data format.

For example, the first data may be processed to obtain the representation form (which may be referred to as the second data subsequently) in which the first data is represented in the floating-point data format.

For example, the second data may be a binary representation form or a hexadecimal representation form in which the first data is represented in the floating-point data format. This is not limited in this application.

For example, the floating-point data format is a data format, and specifies fields constituting floating-point data, a layout of the fields, and an arithmetic explanation. The floating-point data format may include but is not limited to IEEE 754, FP8 (E4M3), FP8 (E5M2), Bfloat16, and TensorFloat-32. It should be understood that another floating-point data format may also be included. This is not limited in this application.

For example, when the first data is "0.125490203" and a bit width is 32, the second data may be a hexadecimal representation in which the first data is represented in an IEEE 754 format, that is, "0X3E008081".

For example, when the first data is "0.35", and a bit width is 32, the second data may be a binary representation in which the first data is represented in an IEEE 754 format, that is, "01000000010100000000000000000000".

For example, there may be one or more pieces of second data. One piece of second data may be generated based on one piece of first data. In other words, a plurality of pieces of first data one-to-one correspond to a plurality of pieces of second data.

For example, after the second data is obtained, the second data may be written into the bitstream. For example, the second data may be written into the bitstream in a form of ASCII character string. For another example, the second data is written into the bitstream in a form of ASCII byte stream. It should be understood that a form in which the second data is written into the bitstream is not limited in this application.

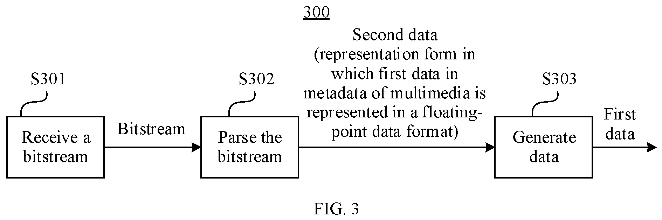

FIG. 3 illustrates a diagram of a process 300 of decoding metadata. The process 300 of decoding the metadata in FIG. 3 corresponds to the process 200 of encoding the metadata in FIG. 2.

S301: Receive a bitstream.

For example, after an encoder side sends the bitstream to a decoder side, the decoder side may receive the bitstream.

S302: Parse the bitstream to obtain second data, where the second data is a representation form in which first data is represented in a floating-point data format, and the first data is floating-point data in metadata of multimedia.

For example, the bitstream received by the decoder side may include the second data, and the second data may be obtained by parsing the bitstream.

S303: Generate first data based on the second data.

For example, after the second data is obtained, the second data may be processed, to convert the second data into the floating-point data, that is, the first data may be obtained. For example, the first data obtained in S303 may be a part or all of the reconstructed metadata in FIG. 1C.

For example, the second data is "0X3E008081", and the first data generated based on the second data may be "0.125490203".

For another example, the second data is "01000000010100000000000000000000", and the first data generated based on the second data may be "0.35".

For a specific syntax element, a codeword with a specified length is usually transmitted in a bitstream. Because a floating-point number is usually a number with high precision, in an existing standard, fixed-point conversion or conversion into another format (for example, an ASCII character string, where length truncation is involved in a conversion process) is performed in a process of encapsulating the syntax element, resulting in a precision loss. However, in this application, a floating-point number storage form (that is, a floating-point data format of the second data) in a computer memory is used in the bitstream for transmission. This can ensure that values of floating-point numbers stored in a memory of a transmitter and a memory of a receiver are completely consistent. In this way, the floating-point data obtained by the decoder side by converting the second data is the same as the first data used by the encoder side for encoding. This ensures that the floating-point number finally obtained by the decoder side is consistent with the original floating-point number of the encoder side.

In addition, because floating-point data in metadata of multimedia of the encoder side and the decoder side is consistent, in a scenario in which reconstructed multimedia needs to be generated based on the metadata of the multimedia or reconstructed multimedia content needs to be displayed based on the metadata of the multimedia, quality of the reconstructed multimedia content or viewing experience during displaying of the reconstructed multimedia content can be improved.

The following specifically describes a process of encoding/decoding metadata.

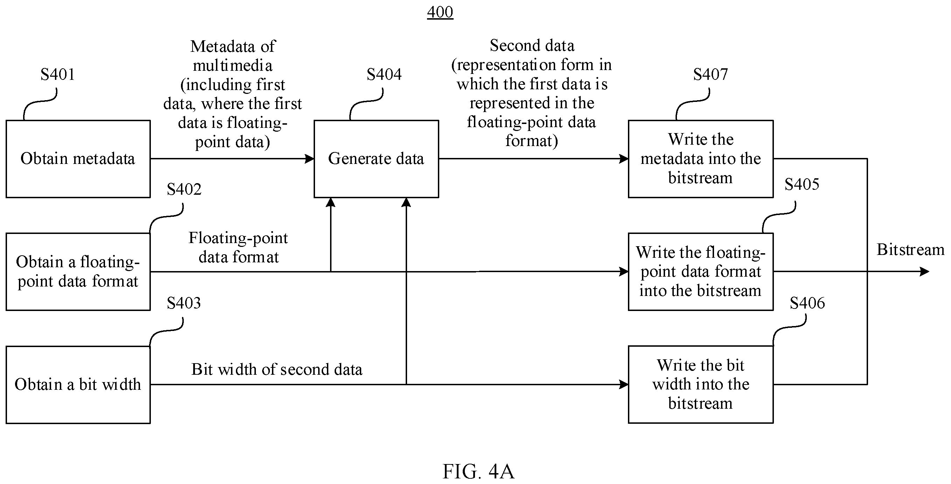

FIG. 4A illustrates a diagram of a process 400 of encoding metadata.

S401: Obtain metadata of multimedia, where the metadata of the multimedia includes first data, and the first data is floating-point data.

For example, each piece of first data in the metadata of the multimedia may be encoded according to steps S402 to S407.

S402: Obtain a floating-point data format.

In a possible implementation, the floating-point data format may be preset. In this way, the preset floating-point data format may be obtained.

In a possible implementation, the floating-point data format may be determined based on an application scenario, a channel condition, a quantity of significant bits of the first data, and the like.

S403: Obtain a bit width of second data.

For example, the bit width (bit width) may be a quantity of bits (bits) occupied by data in a computer system. The bit width may include at least one of the following: 8 bits, 16 bits, 19 bits, 32 bits, 64 bits, or the like. This is not limited in this application.

In a possible implementation, the bit width may be preset. In this way, the preset bit width may be obtained.

In a possible implementation, the bit width may be determined based on an application scenario, a channel condition, a quantity of significant bits of the first data, and the like.

For example, a combination of a floating-point data format and a bit width may be shown in Table 1:

**Table 1**

| Floating-point data format | Bit width (bit) |
|---|---|
| IEEE 754 | 16 |
| IEEE 754 | 32 |
| IEEE 754 | 64 |
| FP8 (E4M3) | 8 |
| FP8 (E5M2) | 8 |
| Half-precision | 16 |
| Bfloat16 | 16 |
| TensorFloat-32 | 19 |
| Single-precision | 32 |

It should be noted that an execution sequence of S402 and S403 is not limited in this application.

S404: Process the first data based on the floating-point data format and the bit width, to obtain the second data.

For example, the first data may be converted based on the floating-point data format and the bit width, to obtain the second data. Specifically, lengths of fields, specified by the floating-point data format for the bit width, of the floating-point data may be determined. Then, the first data may be converted into the second data based on the fields of the floating-point data specified by the floating-point data format, the lengths of the fields, a layout of the fields, and an arithmetic explanation in a decimal-to-binary conversion manner.

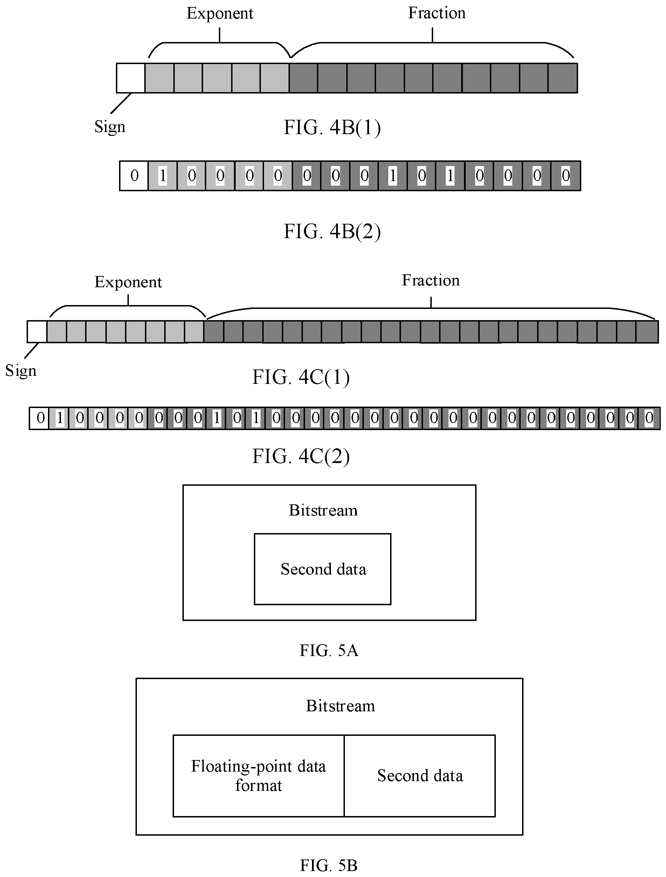

For example, the floating-point data format is IEEE 754, and the bit width is 16 bits. Correspondingly, for the floating-point data format, refer to FIG. 4B(1). From left to right, a 1^{st} bit represents a sign (sign) of floating-point data, a 2^{nd} bit to a 6^{th} bit represent an exponent (exponent) of the floating-point data, and a 7^{th} bit to a 16^{th} bit represent a fraction (fraction) of the floating-point data. The first data "3.25" is converted into the second data "0100000001010000" in a decimal-to-binary conversion manner, as shown in FIG. 4B(2).

For example, the floating-point data format is IEEE 754, and the bit width is 32 bits. Correspondingly, for the floating-point data format, refer to FIG. 4C(1). From left to right, a 1^{st} bit represents a sign (sign) of floating-point data, a 2^{nd} bit to a 9^{th} bit represent an exponent (exponent) of the floating-point data, and a 9^{th} bit to a 32^{nd} bit represent a fraction (fraction) of the floating-point data. The first data "3.25" is converted into the second data "01000000010100000000000000000000" in a decimal-to-binary conversion manner, as shown in FIG. 4C(2).

It should be noted that, in a possible implementation, after the first data is processed based on the floating-point data format and the bit width to obtain binary data, the binary data may be directly used as the second data. In a possible implementation, after the first data is processed based on the floating-point data format and the bit width to obtain binary data, the binary data may be converted into hexadecimal data, and the hexadecimal data is used as the second data.

For example, for another floating-point data format, refer to descriptions in a corresponding standard. Details are not described herein again.

S405: Write the floating-point data format into a bitstream.

For example, when the floating-point data format is determined based on the application scenario, the channel condition, the quantity of significant bits of the first data, and the like, the floating-point data format may be written into the bitstream, so that a decoder side can obtain the floating-point data format, to convert the second data into the first data.

For example, when the floating-point data format is preset, and an encoder side and the decoder side synchronize the floating-point data format in advance, the floating-point data format may not need to be written into the bitstream. For example, when the floating-point data format is preset, but the encoder side and the decoder side do not synchronize the floating-point data format in advance, the floating-point data format may alternatively be written into the bitstream.

S406: Write the bit width of the second data into the bitstream.

For example, when the bit width is determined based on the application scenario, the channel condition, the quantity of significant bits of the first data, and the like, the bit width of the second data may be written into the bitstream, so that the decoder side can obtain the bit width of the second data, to accurately obtain a single piece of second data by dividing a plurality of pieces of second data obtained by parsing the bitstream, and convert the second data into the first data.

For example, when the bit width is preset, and the encoder side and the decoder side synchronize the bit width in advance, the bit width of the second data may not need to be written into the bitstream. For example, when the bit width is preset, but the encoder side and the decoder side do not synchronize the bit width in advance, the bit width of the second data may alternatively be written into the bitstream.

It should be noted that locations of the bit width and the floating-point data format in the bitstream are not limited in this application.

S407: Write the second data into the bitstream.

For example, when the multimedia is an image or a video, the second data may be encapsulated based on an image encapsulation format, to obtain a bitstream. The image encapsulation format includes but is not limited to a JPEG JFIF encapsulation format, a JPEG universal metadata box format, a JUMBF encapsulation format, a high efficiency image file format (High Efficiency Image File Format, HEIF), an MP4 file format, and the like. This is not limited in this application.

For example, the second data is encapsulated based on the JPEG JFIF encapsulation format. The second data may be encapsulated into an APPN field in the JPEG JFIF encapsulation format, as shown in Table 2.

**Table 2**

| Marker | Identifier string | Comment |
|---|---|---|
| APP0 | JFIF | ISO/IEC 10918-5 JPEG File Interchange Format |
| APP1 | XMP | ISO 16684-1 Extensible Metadata Platform (multi-segment) |
| APP2 | ICC_PROFILE | ISO 15076-1 International Color Consortium (multi-segment) |
| APP2 | MPF | CIPA DC-007-2009 Multi-Picture Format |
| APP11 | JP | ISO/IEC 18477-3 \| ISO/IEC 19566-5 ISO Box-Based Format Extensions |

For explanations of the information shown in Table 2, refer to descriptions in ISO/IEC FDIS 10918-4:2023 APPn markers (JPEG 1 part4). Details are not described herein again.

For example, the second data is encapsulated based on the JUMBF encapsulation format.

In a possible implementation, the second data may be encapsulated into a payload of APP11 JP in the JUMBF encapsulation format, as shown in Table 3:

**Table 3**

| Parameter | Size (bits) | Value |
|---|---|---|
| APP11 | 16 | 0xFFEB |
| Le | 16 | 8...65535 |
| Cl | 16 | 0x4A50 (ASCII encoding of "JP") |
| En | 16 | 1...65535 |
| Z | 32 | 1...232-1 |
| Lbox | 32 | 1 or 8...232-1 |
| Tbox | 32 | 0...232-1 |
| XLBox | 0 or 64 | 16...264-1 |
| Payload data | Varies | Varies |

For explanations of the information shown in Table 3, refer to descriptions in the JPEG universal metadata box format standard. Details are not described herein again.

In a possible implementation, the second data may be encapsulated into a box (box) in the JUMBF encapsulation format.

For example, the second data may be encapsulated based on HEIF. For example, the second data may be encapsulated into a packet structure of HEIF. For another example, the second data is encapsulated into 'tmap' and 'idat' of HEIF. For descriptions of 'tmap' and 'idat', refer to descriptions in ISOIEC 23008-12 AMD 3. Details are not described herein again.

For example, when the multimedia is an image or a video, the second data may be encapsulated into supplemental enhancement information (Supplemental Enhancement Information, SEI) of HEVC or VVC, a user-defined network abstract layer (Network Abstract Layer, NAL) unit, or a reserved NAL unit.

It should be understood that the second data may alternatively be encapsulated into a file location indicated by metadata location information (the metadata location information may be one type of data in the metadata of the multimedia), for example, a location after an EOI (end of image) of a complete JPEG file, or an end of a complete HEIF file. This is not limited in this application.

It should be understood that a file location of the second data in the bitstream is not limited in this application.

For example, a metadata structure of the multimedia is not limited in this application, for example, may be a metadata structure corresponding to 'tmap' in 23008-12 AMD 3, as shown below:

```
         struct ToneMapChannel {
             SignedRational gain_map_min;
             SignedRational gain_map_max;
             UnsignedRational gamma;
             SignedRational base_offset;
             SignedRational alternate_offset;
         }
```

SignedRational represents a metadata type, and ain_map_min, ..., and alternate_offset are metadata. A part or all of the metadata is the first data.

For another example, the metadata structure of the multimedia may be described in an XML or an XML format, as shown below:

```
         <x:xmpmeta xmlns:x="adobe:ns:meta/" x:xmptk="XMP Core 6.0.0">
           <rdf:RDF xmlns:rdf="http://www.w3.org/1999/02/22-rdf-syntax-ns#">
              <rdf:Description rdf:about=""
               xmlns:gainmaphdrgm="http://www.iso.org/standard/86775/gainmap/1.0/"
               gainmaphdrgm:Versiontag="0x0000803f"
               gainmaphdrgm:NumberOfComponent="1"
               gainmaphdrgm:PerComponentMinGainmapValues="0x497b13bf"
               gainmaphdrgm:PerComponentMaxGainmapValues="0xf2b09640"
               gainmaphdrgm:PerComponentBaselineOffset="0x0000803c"
               gainmaphdrgm:PerComponentAlternateOffset="0x0000803c"
               gainmaphdrgm:PerComponentGamma="0x0000803f"
               gainmaphdrgm:BaselineHDRheadroom="0x0000803c"
               gainmaphdrgm:AlternateHDRheadroom="0x0000803c"
           </rdf:RDF>
         </x:xmpmeta>
```

PerComponentMinGainmapValues, ..., and AlternateHDRheadroom are metadata. A part or all of the metadata is the first data.

In addition, when the second data is written into the bitstream in a form of ASCII byte stream, the second data may be written into the bitstream from a high bit to a low bit, or the second data may be written into the bitstream from a low bit to a high bit. This is not limited in this application.

It should be noted that an execution sequence of S405, S406, and S407 is not limited in this application. For example, S405→S406→S407 may be performed. Correspondingly, in the bitstream, the bit width is located after the floating-point data format, and the second data is located after the bit width.

FIG. 5A illustrates a diagram of a structure of a bitstream. As shown in FIG. 5A, in a possible implementation, the bitstream in this application may include second data.

FIG. 5B illustrates a diagram of a structure of a bitstream. As shown in FIG. 5B, in a possible implementation, the bitstream in this application may include second data and a floating-point data format.

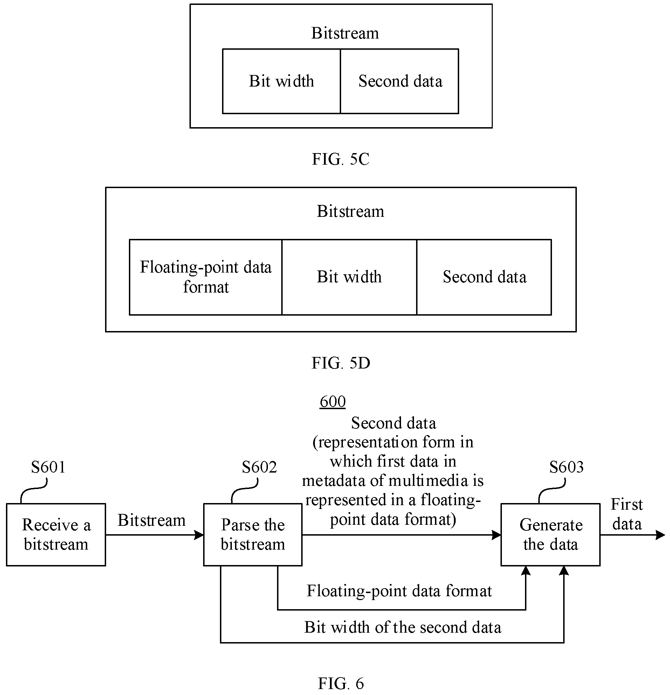

FIG. 5C illustrates a diagram of a structure of a bitstream. As shown in FIG. 5C, in a possible implementation, the bitstream in this application may include second data and a bit width.

FIG. 5D illustrates a diagram of a structure of a bitstream. As shown in FIG. 5D, in a possible implementation, the bitstream in this application may include second data, a floating-point data format, and a bit width.

It should be noted that a sequence/arrangement locations of the floating-point data format, the bit width, and the second data in the bitstream is/are not limited in this application.

For example, this application provides a bitstream transmission apparatus. The bitstream transmission apparatus may include a transmitter and at least one storage medium. The at least one storage medium is configured to store the bitstream generated in the process 200 of encoding the metadata or the process 400 of encoding the metadata. The transmitter is configured to: obtain the bitstream from the storage medium, and send the bitstream to a terminal-side device via a transmission medium.

For example, an encoder side or the bitstream transmission apparatus may send the bitstream to a bitstream delivery system. The bitstream delivery system may include at least one storage medium and a streaming media device. The storage medium is configured to store the bitstream generated in the process 200 of encoding the metadata or the process 400 of encoding the metadata. The streaming media device is configured to: obtain a target bitstream from the at least one storage medium, and send the target bitstream to the terminal-side device. The streaming media device includes a content server or a content delivery server.

For example, this application further provides a bitstream storage apparatus. The bitstream storage apparatus may include a receiver and at least one storage medium. The receiver is configured to receive a bitstream, and the at least one storage medium is configured to store the bitstream. The bitstream may be the bitstream generated in the process 200 of encoding the metadata or the process 400 of encoding the metadata.

FIG. 6 illustrates a diagram of a process 600 of decoding metadata. The process 600 of decoding the metadata in FIG. 6 corresponds to the process 400 of encoding the metadata in FIG. 4A.

S601: Receive a bitstream.

S602: Parse the bitstream to obtain second data, a floating-point data format, and a bit width of the second data.

For example, when an encoder side writes the floating-point data format and the bit width of the second data into the bitstream, a decoder side may parse the bitstream to obtain the second data, the floating-point data format, and the bit width.

For example, the second data may be obtained by parsing the bitstream from an image encapsulation format.

For example, the second data may be obtained through parsing from a JPEG JFIF encapsulation format. For example, the second data is obtained through parsing from an APPN field in the JPEG JFIF encapsulation format.

For another example, the second data may be obtained through parsing from a JUMBF encapsulation format. For example, the second data may be obtained through parsing from a payload of APP11 JP in the JUMBF encapsulation format. For another example, the second data may be obtained through parsing from a box in the JUMBF encapsulation format.

For another example, the second data is obtained through parsing from an SEI of HEVC or VVC, or a user-defined NAL unit, or a reserved NAL unit.

It should be understood that metadata location information (the metadata location information may be one type of data in metadata of multimedia, and indicates a file location of the metadata of the multimedia) may further be obtained by parsing the bitstream; and then, the second data is obtained through parsing from a file location (for example, a location after an EOI (end of image) of a complete JPEG file, or an end of a complete HEIF file, which is not limited in this application) indicated by the metadata location information in the bitstream.

It should be understood that the decoder side may alternatively obtain the second data through parsing from another file location in the bitstream. This is not limited in this application.

For example, when the decoder side fails to obtain the floating-point data format by parsing the bitstream, a preset floating-point data format may be obtained.

For example, when the decoder side fails to obtain the bit width by parsing the bitstream, a preset bit width may be obtained.

For example, a plurality of pieces of second data may be obtained by parsing the bitstream, and the plurality of pieces of second data are concatenated together. Further, the plurality of pieces of second data that are concatenated together may be divided based on the floating-point data format, the bit width, and a metadata structure, to obtain a single piece of independent second data.

S603: Process the second data based on the floating-point data format and the bit width, to obtain first data.

For example, each piece of second data may be converted into floating-point data based on the floating-point data format and the bit width, to obtain one piece of first data. Specifically, for a process of converting a representation form represented in the floating-point data format into floating-point data, refer to descriptions in the conventional technology. Details are not described herein.

The following describes, based on the foregoing process of encoding/decoding the metadata, processes of generating a base image, enhanced data, and metadata of the enhanced data, and encoding/decoding processes.

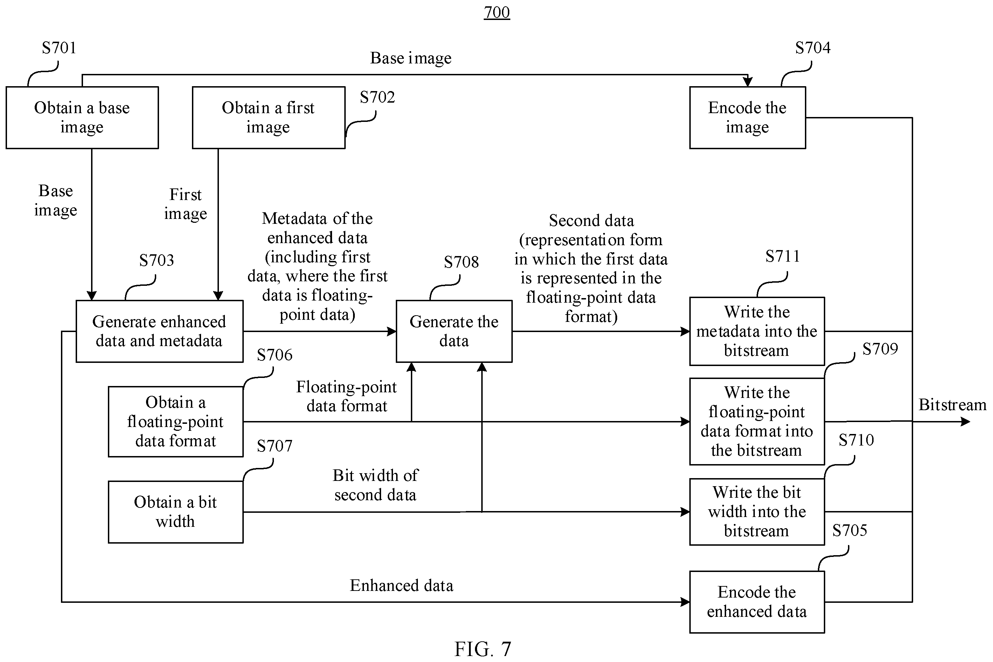

FIG. 7 illustrates a diagram of a process 700 of encoding an image and metadata of the image. In the encoding process 700, the metadata of the image is metadata of enhanced data.

S701: Obtain a base image.

In a possible implementation, an SDR image may be obtained, and the SDR image is used as the base image.

In a possible implementation, an HDR image may be obtained, and the HDR image is used as the base image.

It should be noted that a foreground of the SDR image is the same as a foreground of the HDR image, and a background of the SDR image is the same as a background of the HDR image. In other words, content (including an object, a scene, and the like) included in the SDR image is the same as that included in the HDR image.

For example, a manner of obtaining the HDR image may be as follows:

For example, a plurality of SDR images with different exposure values may be captured via a camera, and then, the plurality of SDR images with the different exposure values are composed to obtain an HDR image. A photosensitive element of the camera has different photoelectric characteristics at different locations, so that the plurality of SDR images with the different exposure values can be captured.

For another example, an HDR image may be photographed via a professional capture device, and then, the HDR image is transmitted to an encoder side in a manner like sending or copying.

It should be noted that the manner of obtaining the HDR image is not limited in this application.

It should be noted that a format of the HDR image is not limited in this application. For example, in terms of color space, the HDR image may be a YUV image, or may be an RGB image. In terms of a bit width of data, a bit width of the HDR image may be 8 bits, 10 bits, 12 bits, or the like. An optical-electro transfer function corresponding to the HDR image may be a perception quantization (Perception Quantization, PQ) function, a gamma (gamma) function, a logarithm (logarithm, log) function, a hybrid log-gamma (Hybrid Log-Gamma, HLG) function, or the like.

For example, a process of obtaining an SDR image may be as follows:
For example, an SDR image with a different brightness feature from that of an HDR image is captured via a camera, or an SDR image in a format that adapts to display features of a large quantity of existing devices is captured via a camera.

For another example, an SDR image is photographed via a professional capture device, and then, the SDR image is transmitted to an encoder side in a manner like sending or copying.

For another example, an SDR image is generated based on an HDR image. For example, an SDR image may be obtained by performing tone mapping on an HDR image. For another example, an HDR image is input to a neural network, to obtain an SDR image.

It should be noted that the manner of obtaining the SDR image is not limited in this application.

It should be noted that a format of the SDR image is not limited in this application. For example, in terms of color space, the SDR image may be a YUV image, or may be an RGB image. In terms of a bit width of data, a bit width of the SDR image may be 8 bits, 10 bits, 12 bits, or the like. An optical-electro transfer function of the SDR image may be a PQ function, a gamma function, a log function, an HLG function, or the like.

S702: Obtain a first image.

For example, when the SDR image is used as the base image, the HDR image may be used as the first image.

For example, when the HDR image is used as the base image, the SDR image may be used as the first image.

S703: Obtain enhanced data and metadata of the enhanced data based on the base image and the first image.

For example, S703 may include S7031 to S7034.

S7031: Obtain a first intermediate image based on the base image.

In a possible implementation, the base image may be directly used as the first intermediate image.

In a possible implementation, the base image may be encoded to obtain a bitstream of the base image. Then, the bitstream of the base image is decoded to obtain a reconstructed image of the base image; and the reconstructed image of the base image is used as the first intermediate image. A codec like JPEG, HEIF, H.264, or HEVC may be used to encode/decode the base image. This is not limited in this application.

S7032: Generate a second intermediate image based on the first intermediate image.

In a possible implementation, the first intermediate image may be used as the second intermediate image.

In a possible implementation, a first mapping relationship between the first intermediate image and the local or global HDR image may be obtained. Then, the first intermediate image may be mapped based on the first mapping relationship, to obtain the second intermediate image.

For example, a plurality of feature luminance values of the HDR image may be obtained. For example, a histogram of the HDR image is obtained, and luminance at a peak location in the histogram is obtained as a feature luminance value. For another example, an average luminance value of a specific region (for example, a face, a green plant, and a blue sky) in the HDR image is obtained as a feature luminance value. Next, a pixel location of the feature luminance value in the HDR image is determined, and a luminance value of the pixel location in the base image is determined. Then, the first mapping relationship is determined based on the feature luminance value and the luminance value of the pixel location in the base image.

For example, the first mapping relationship may have a plurality of forms, for example, a form like Sigmoid, a cubic spline, gamma, or a straight line, or an inverse function form thereof. This is not limited in this application. For example, the first mapping relationship may be represented by the following curve: $L ′ = F \left(L\right) = α * {\left(\frac{p * {L}^{n}}{\left(p-1\right) * {L}^{n} + 1}\right)}^{m} + b$

In the formula, L and L' may be normalized optical signals or electrical signals, a and b are scaling coefficients, n and m are power exponents, and p is a control parameter. This is not limited in this application.

For another example, the first mapping relationship may be an inverse curve of the foregoing curve.

For example, a manner of mapping the first intermediate image based on the first mapping relationship (which may be represented by TMB1()) may be as follows: baseAfter[i]=TMB1(base[i]) or baseAfter[i]=TMB1()*base[i]. base[i] is a pixel value of an i^{th} pixel in the first intermediate image, and baseAfter[i] is a pixel value of an i^{th} pixel in the second intermediate image.

It should be noted that, in this application, each of baseAfter[i] and base[i] may be any domain, and each of baseAfter[i] and base[i] may be a linear domain, a PQ domain, a log domain, or the like. In addition, color space of each of baseAfter[i] and base[i] is not limited in this application, and may be color space like YUV, RGB, Lab, HSV, or CIEXYZ.

It should be noted that, in a possible implementation, color gamut mapping may be performed on the first intermediate image, to convert the first intermediate image from a current color gamut to a target color gamut; and then, the first intermediate image on which color gamut mapping is performed is mapped based on the first mapping relationship, to obtain the second intermediate image. In another possible implementation, after the first intermediate image is mapped based on the first mapping relationship, to obtain the second intermediate image, color gamut mapping may be performed on the second intermediate image, to convert the second intermediate image from a current color gamut to a target color gamut. The current color gamut and the target color gamut include but are not limited to BT.2020, BT.709, DCI-P3, and sRGB.

For example, a parameter of the first mapping relationship may be used as the metadata of the enhanced data. The parameter of the first mapping relationship may be the first data.

S7033: Generate a third intermediate image based on the first image and the second intermediate image.

In a possible implementation, the third intermediate image=g(first image)/f(baseAfter[i]), where each of g() and f() is a numerical domain transfer function. For example, each of g() and f() may be a log, an optical-electro transfer function (Optical-Electro Transfer Function, OETF), an electro-optical transfer function (Electro-Optical Transfer Function, EOTF), a linear function, or a piecewise curve. For example, g() and f() may also include processing on the second intermediate image. For example, a data range (for example, a minimum value and/or a maximum value) of the second intermediate image is obtained; and the minimum value of the second intermediate image is mapped to 0 or a preset value, and/or the maximum value of the second intermediate image is mapped to 1.0 or a preset value, and/or an intermediate value of the second intermediate image is mapped to an intermediate value based on a second mapping relationship (the second mapping relationship may be determined based on the maximum value and/or the minimum value of the second intermediate image).

In a possible implementation, the third intermediate image=g(first image)-f(baseAfter[i]), where each of g() and f() is a numerical domain transfer function. For example, each of g() and f() may be a log, an OETF, an EOTF, a linear function, or a piecewise curve. For example, g() and f() may also include processing on the second intermediate image. For example, a data range (for example, a minimum value and/or a maximum value) of the second intermediate image is obtained; and the minimum value of the second intermediate image is mapped to 0 or a preset value, and/or the maximum value of the second intermediate image is mapped to 1.0 or a preset value, and/or an intermediate value of the second intermediate image is mapped to an intermediate value based on a second mapping relationship (the second mapping relationship may be determined based on the maximum value and/or the minimum value of the second intermediate image).

For example, a parameter of the second mapping relationship may be used as the metadata of the enhanced data. The parameter of the second mapping relationship may be the first data.

S7034: Process the third intermediate image to obtain the enhanced data and the metadata of the enhanced data.

Optionally, downsampling may be performed on the third intermediate image to obtain a fourth intermediate image (which may be represented by enhance).

In a possible implementation, a data range (for example, a minimum value or a maximum value) of the fourth intermediate image may be obtained; and the minimum value of the fourth intermediate image is mapped to 0 or a preset value, and/or the maximum value of the fourth intermediate image is mapped to 1.0 or a preset value, and/or an intermediate value of the fourth intermediate image is mapped to an intermediate value based on a third mapping relationship (the third mapping relationship may be determined based on the maximum value and/or the minimum value of the fourth intermediate image), to obtain enhanced data. The maximum value, the minimum value, and the intermediate value of the fourth intermediate image may all be used as metadata, and the maximum value, the minimum value, and the intermediate value of the fourth intermediate image may be the first data.

For example, a parameter of the third mapping relationship may be used as the metadata of the enhanced data. The parameter of the third mapping relationship may be the first data.

In a possible implementation, a histogram of the fourth intermediate data may be obtained, and the histogram of the fourth intermediate data is processed by using a histogram equalization method, to obtain a fourth mapping relationship TMB2(). Then, the fourth intermediate image may be mapped based on the fourth mapping relationship, to obtain enhanced data. For example, the fourth intermediate image may be mapped in the following manner: enhanceAfter[i]=TMB2(enhance[i]) or enhanceAfter[i]=TMB2()*enhance[i]. enhanceAfter[i] is enhanced data corresponding to an i^{th} pixel in the base image, and enhance[i] is an i^{th} pixel in the fourth intermediate image.

For example, a parameter of the fourth mapping relationship may be used as the metadata of the enhanced data. The parameter of the fourth mapping relationship may be the first data.

In other words, the metadata of the enhanced data may include data that affects a processing result in a process of determining the enhanced data based on the base image and the first image.

It should be understood that a manner of determining the enhanced data and the metadata of the enhanced data based on the base image and the first image is not limited in this application.

For example, the fourth mapping relationship has various forms, for example, a form like Sigmoid, a cubic spline, gamma, a straight line, a linear form, or a piecewise curve, or an inverse function form thereof. This is not limited in this application.

It should be noted that, in this application, each of enhanceAfter[i] and enhance[i] may be any domain. For example, each of enhanceAfter[i] and enhance[i] may be a linear domain, a PQ domain, or a log domain. Color space of each of enhanceAfter[i] and enhance[i] is not limited in this application, and may be color space like YUV, RGB, Lab, or HSV.

It should be noted that, in a possible implementation, color gamut mapping may be performed on the fourth intermediate image, to convert the fourth intermediate image from a current color gamut to a target color gamut; and then, the fourth intermediate image on which color gamut mapping is performed is mapped based on the fourth mapping relationship, to obtain the enhanced data. In another possible implementation, after the fourth intermediate image is mapped based on the fourth mapping relationship to obtain the enhanced data, color gamut mapping may be performed on the enhanced data, to convert the enhanced data from the current color gamut to the target color gamut. The current color gamut and the target color gamut include but are not limited to BT.2020, BT.709, DCI-P3, and sRGB.

S704: Encode the base image.

For example, for a process of encoding the base image, refer to an image encoding process in the conventional technology. Details are not described herein again.

S705: Encode the enhanced data.

For example, one pixel in the base image may correspond to one piece of enhanced data, or a plurality of pixels correspond to one piece of enhanced data. The enhanced data may include a plurality of values, and quantities of values included in enhanced data corresponding to all pixels are the same.

For example, the enhanced data may be encapsulated into an SEI of HEVC or VVC, a user-defined NAL unit, a reserved NAL unit, APP extension information encapsulated into a JFIF, or a data segment encapsulated into an MP4.

For example, the enhanced data may alternatively be encapsulated into a file location indicated by metadata location information, for example, a location after an EOI (end of image) of a complete JPEG file.

It should be understood that a location of the enhanced data in the bitstream is not limited in this application.

For example, the metadata of the enhanced data may be encoded according to S706 to S711.

S706: Obtain a floating-point data format.

S707: Obtain a bit width of the second data.

S708: Process the first data based on the floating-point data format and the bit width, to obtain the second data.

S709: Write the floating-point data format into the bitstream.

S710: Write the bit width of the second data into the bitstream.

S711: Write the second data into the bitstream.

For example, for S706 to S711, refer to descriptions of S402 to S407. Details are not described herein again.

It should be noted that an encoder for encoding the base image, the enhanced data, and the metadata of the enhanced data is not limited in this application, for example, JPEG, HEIF, H.264, or HEVC.

It should be noted that an execution sequence of encoding the base image, the enhanced data, and the metadata of the enhanced data is not limited in this application.

It should be noted that the encoded base image, the encoded enhanced data, and the encoded metadata of the enhanced data may be stored in a bitstream/file, and the encoded base image, the encoded enhanced data, and the encoded metadata of the enhanced data may be considered as three parts of the bitstream/file.

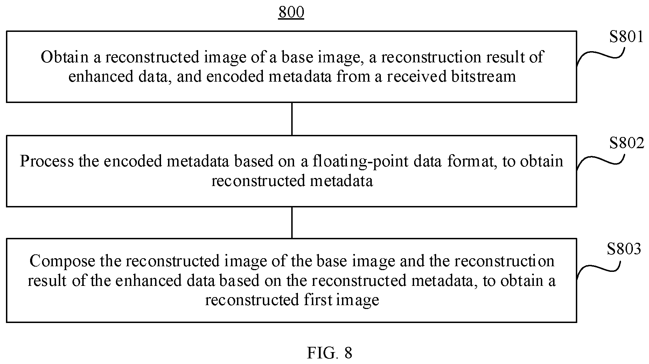

FIG. 8 illustrates a diagram of a process 800 of decoding an image and metadata of the image. The decoding process 800 in FIG. 8 corresponds to the encoding process 700 in FIG. 7.

S801: Obtain a reconstructed image of a base image, a reconstruction result of enhanced data, and encoded metadata from a received bitstream.

For S801, refer to the following descriptions of S902 to S905. Details are not described herein again.

For example, the encoded metadata may include second data.

S802: Process the encoded metadata based on a floating-point data format, to obtain reconstructed metadata.

For example, for the second data, the second data may be processed based on a floating-point data format, to obtain reconstructed second data, namely, first data.

S803: Compose the reconstructed image of the base image and the reconstruction result of the enhanced data based on the reconstructed metadata, to obtain a reconstructed first image.

For example, when the base image is an HDR image and the first image is an SDR image, if a decoder side supports displaying of only the SDR image, the reconstructed image of the base image and the reconstruction result of the enhanced data may be composed based on the reconstructed metadata, to obtain a reconstructed SDR image; or if a decoder side supports displaying of the HDR image, the reconstructed image of the base image may be displayed.

For example, when the base image is an SDR image and the first image is an HDR image, if a decoder side supports displaying of the HDR image, the reconstructed image of the base image and the reconstruction result of the enhanced data may be composed based on the reconstructed metadata, to obtain a reconstructed HDR image; or if a decoder side supports displaying of only the SDR image, the reconstructed image of the base image may be displayed.

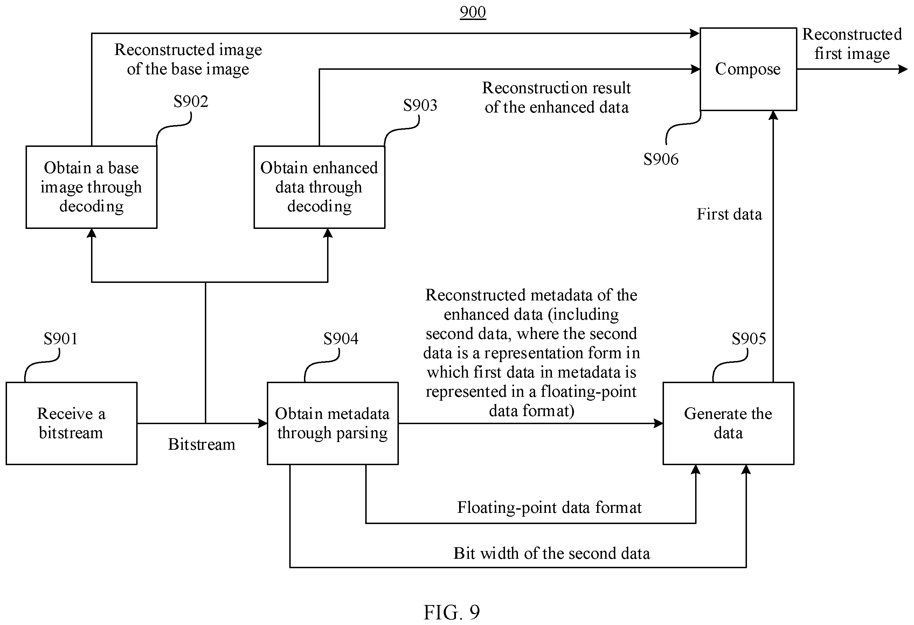

FIG. 9 illustrates a diagram of a process 900 of decoding an image and metadata of the image. The decoding process 900 in FIG. 9 is a specific description of the decoding process 800 in FIG. 8.

S901: Receive a bitstream.

S902: Decode the bitstream to obtain a reconstructed image of a base image.

For example, any decoder (for example, HEVC, JPEG, ProRes, or HEIF) may be used to decode the received bitstream, to obtain the reconstructed image of the base image.

It should be noted that a format of the reconstructed image of the base image is not limited in this application. In terms of color space, the reconstructed image of the base image may be a YUV image, or may be an RGB image. In terms of a bit width of data, a bit width of the reconstructed image of the base image may be 8 bits, 10 bits, 12 bits, or the like.

S903: Decode the bitstream to obtain a reconstruction result of enhanced data.

For example, the reconstruction result of the enhanced data may be obtained through decoding from an SEI of HEVC or VVC, a user-defined NAL unit, a reserved NAL unit, APP extension information encapsulated into a JFIF, or a data segment encapsulated into an MP4.

For example, the reconstruction result of the enhanced data may alternatively be obtained through decoding from a file location indicated by metadata location information, for example, a location after an EOI (end of image) of a complete JPEG file.

It should be understood that the reconstruction result of the enhanced data may alternatively be obtained through decoding from another file location. This is not limited in this application.

S904: Parse the bitstream to obtain second data, a floating-point data format, and a bit width of the second data.

S905: Process the second data based on the floating-point data format and the bit width of the second data, to obtain first data.

For example, for S904 and S905, refer to descriptions of S502 and S503. Details are not described herein again.

For example, an execution sequence of S902, S903, and S904 is not limited in this application.

It should be understood that the bitstream may further be decoded to obtain other reconstructed data (the other reconstructed data is a reconstruction result of data other than the first data in metadata of the enhanced data), so as to obtain reconstructed metadata of the enhanced data.

S906: Compose the reconstructed image of the base image and the reconstruction result of the enhanced data based on the reconstructed metadata of the enhanced data, to obtain a reconstructed first image.

For example, the reconstructed image of the base image and the reconstruction result of the enhanced data may be composed based on the reconstructed metadata of the enhanced data, to obtain a reconstructed SDR image or a reconstructed HDR image. In this application, an example in which the base image is an SDR image and the first image is an HDR image is used for description. S1 to S6 may be included as follows.

S1: Process the reconstructed image of the base image based on the reconstructed metadata of the enhanced data, to obtain a first reconstructed image.

In a possible implementation, the reconstructed image of the base image is used as the first reconstructed image, that is, R_baseAfter[i]=R_Base[i]. R_baseAfter[i] represents a pixel value of an i^{th} pixel in the first reconstructed image, and R_Base[i] represents a pixel value of an i^{th} pixel in the reconstructed image of the base image.

In a possible implementation, a lower limit THL of the base image is obtained from the reconstructed metadata of the enhanced data, and the first reconstructed image is obtained in the following manner: R_baseAfter[i]=R_Base[i]+THL.

In a possible implementation, a parameter of a first mapping relationship and the lower limit THL of the base image are obtained from the reconstructed metadata of the enhanced data; and the first mapping relationship TMB1() is obtained based on the parameter of the first mapping relationship. Then, the first reconstructed image is obtained in the following manner: R_baseAfter[i]=TMB1(R_Base[i]+THL).

In a possible implementation, the parameter of the first mapping relationship is obtained from the reconstructed metadata of the enhanced data, and the first mapping relationship: TMB11() and TMB12() is obtained based on the parameter, where TMB11() may be a global tone mapping function and/or a local tone mapping function, and TMB12 may be in a form like a linear form, a spline, or a piecewise curve. Then, the first reconstructed image is obtained in the following manner: R_baseAfter[i]=TMB11(TMB12(R_Base[i])).

It should be noted that, in this application, each of R_baseAfter[i] and R_Base[i] may be any domain. For example, each of R_baseAfter[i] and R_Base[i] may be a linear domain, a PQ domain, or a log domain. In addition, color space of each of R_baseAfter[i] and R_Base[i] is not limited in this application, and may be color space like YUV, RGB, Lab, or HSV.

It should be noted that, in a possible implementation, color gamut mapping may be performed on the reconstructed image of the base image, to convert the reconstructed image of the base image from a current color gamut to a target color gamut; and then, the reconstructed image of the base image on which color gamut mapping is performed is processed based on the reconstructed metadata of the enhanced data, to obtain the first reconstructed image. In another possible implementation, after the reconstructed image of the base image is processed based on the reconstructed metadata of the enhanced data to obtain the first reconstructed image, color gamut mapping may be performed on the first reconstructed image, to convert the first reconstructed image from a current color gamut to a target color gamut. The current color gamut and the target color gamut include but are not limited to BT.2020, BT.709, DCI-P3, and sRGB.

S2: Perform transformation processing on the reconstruction result of the enhanced data based on the reconstructed metadata of the enhanced data, to obtain a first reconstruction result.

For example, transformation processing may be upsampling on the reconstruction result of the enhanced data, to obtain the first reconstruction result. For example, upsampling may be performed via a preset filter, or upsampling may be performed in a manner including a plurality of directional interpolations, or upsampling may be performed by using a bicubic spline method. This is not limited in this application.

S2: Process the first reconstruction result based on the reconstructed metadata of the enhanced data, to obtain a second reconstruction result.

Optionally, the first reconstruction result (which may be referred to as R_enhance) may be normalized. Generally, 8-bit data ranges from 0 to 255. All numbers in R_enhance are divided by 255.0, to convert the range to a range from 0 to 1.0. This is not limited in this application.

In a possible implementation, the first reconstruction result or the normalized first reconstruction result is used as the second reconstruction result, that is, R_enhanceAfter[i]=R_enhance[i]. R_enhanceAfter[i] is an i^{th} pixel of the second reconstruction result, and R_enhance[i] is an i^{th} pixel of the first reconstruction result/or an i^{th} pixel of the normalized first reconstruction result.

In a possible implementation, a parameter of a fourth mapping relationship, and an upper limit THL and a lower limit THH of the enhanced data may be obtained from the reconstructed metadata of the enhanced data, and the fourth mapping relationship TMB2() is obtained based on the parameter of the fourth mapping relationship, where R_enhanceAfter[i]=TMB2(R_enhance[i]*THH+(A-R_enhance[i])*THL).

In a possible implementation, a parameter of a fourth mapping relationship, and an upper limit THL and a lower limit THH of the enhanced data may be obtained from the reconstructed metadata of the enhanced data, and the fourth mapping relationship TMB2() is obtained based on the parameter of the fourth mapping relationship, where R_enhanceAfter[i]=TMB2(R_enhance[i])*THH+(A-TMB2(R_enhance[i]))*THL.

It should be noted that, in this application, each of R_enhanceAfter[i] and R_enhance[i] may be any domain. For example, each of R_enhanceAfter[i] and R_enhance[i] may be a linear domain, a PQ domain, or a log domain. Color space of each of R_enhanceAfter[i] and R_enhance[i] is not limited in this application, and may be color space like YUV, RGB, Lab, or HSV.

It should be noted that, in a possible implementation, color gamut mapping may be performed on the first reconstruction result, to convert the first reconstruction result from a current color gamut to a target color gamut; and then, the first reconstruction result on which color gamut mapping is performed is mapped based on the fourth mapping relationship, to obtain the second reconstruction result. In another possible implementation, after the first reconstruction result is mapped based on the fourth mapping relationship to obtain the second reconstruction result, color gamut mapping may be performed on the second reconstruction result, to convert the second reconstruction result from a current color gamut to a target color gamut. The current color gamut and the target color gamut include but are not limited to BT.2020, BT.709, DCI-P3, and sRGB.

Then, a second reconstructed image recHDR may be obtained based on R_baseAfter and R_enhanceAfter, where recHDR[i]=g(baseAfter[i])*f(R_enhanceAfter[i]) or recHDR[i]=R_baseAfter[i]+f(R_enhanceAfter[i]), and each of g() and f() is a numerical domain transfer function. recHDR[i] may be any component of an RGB or YUV component, and f(R_enhanceAfter[i]) is a gain of any component obtained based on the reconstruction result of the enhanced data.

It should be noted that, after the second reconstructed image recHDR is obtained, whether to perform other image processing on the second reconstructed image recHDR before the second reconstructed image recHDR is displayed is not limited in the present invention.

S4: Generate a reconstructed HDR image recHDRAfter based on the reconstructed metadata of the enhanced data.

In a possible implementation, the second reconstructed image may be used as the reconstructed HDR image, that is, recHDRAfter[i]=recHDR[i].

In a possible implementation, a lower limit THL of the second reconstructed image may be obtained from the reconstructed metadata of the enhanced data, and a manner of generating the HDR reconstructed image may be as follows: recHDRAfter[i]=recHDR[i]+THL.

In a possible implementation, an upper limit THH of the second reconstructed image may be obtained from the reconstructed metadata of the enhanced data, and a manner of generating the reconstructed HDR image may be as follows: recHDRAfter[i]=TMB1(R_base[i]).

It should be noted that forms of f(x) and TMB1() are not limited in the present invention. That is, each of recHDRAfter[i] and recHDR[i] may be any domain. For example, each of recHDRAfter[i] and recHDR[i] may be a linear domain, a PQ domain, or a log domain. Color space of each of recHDRAfter[i] and recHDR[i] is not limited in the present invention, and may be color space like YUV, RGB, Lab, or HSV.

In this application, a manner of encoding/decoding the reconstructed metadata of the enhanced data does not cause a loss in precision of the reconstructed metadata of the enhanced data, and the reconstructed metadata of the enhanced data obtained by a decoder side is the same as the metadata of the enhanced data encoded by an encoder side, so that quality of an SDR image or an HDR image obtained by the decoder side can be ensured.

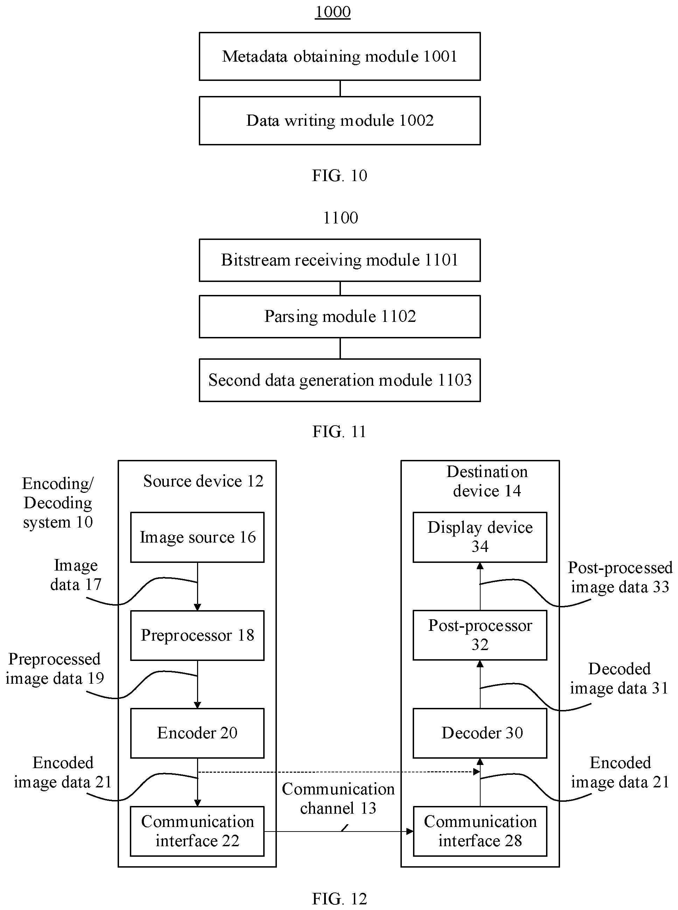

FIG. 10 illustrates a diagram of an encoding apparatus 1000. The encoding apparatus 1000 may be configured to perform the method in the foregoing embodiment. Therefore, for beneficial effect that can be achieved, refer to beneficial effect in the corresponding method provided above. Details are not described herein again.

Refer to FIG. 10. For example, the encoding apparatus 1000 may include:
a metadata obtaining module 1001, configured to obtain metadata of multimedia, where the metadata of the multimedia includes first data, and the first data is floating-point data; and
a data writing module 1002, configured to write second data into a bitstream, where the second data is a representation form in which the first data is represented in a floating-point data format.

For example, the encoding apparatus 1000 further includes:
a first data generation module, configured to generate the second data based on the first data.

For example, the encoding apparatus 1000 further includes:
a first format obtaining module, configured to obtain the floating-point data format; and
the first data generation module, specifically configured to process the first data based on the floating-point data format, to obtain the second data.

For example, the encoding apparatus 1000 further includes:
a first bit width obtaining module, configured to obtain a bit width of the second data; and
the first data generation module, specifically configured to process the first data based on the floating-point data format and the bit width of the second data, to obtain the second data.

For example, the data writing module 1002 is further configured to write the bit width into the bitstream.

For example, the data writing module 1002 is further configured to write the floating-point data format into the bitstream.

For example, the second data is a binary representation form or a hexadecimal representation form in which the first data is represented in the floating-point data format.

For example, the metadata of the multimedia is metadata of a high dynamic range HDR image.

For example, the metadata of the multimedia is metadata of enhanced data, and the enhanced data is generated based on a standard dynamic range SDR image and an HDR image.

For example, the floating-point data format includes at least one of the following: IEEE 754, FP8 (E4M3), FP8 (E5M2), Bfloat16, or TensorFloat-32.

FIG. 11 illustrates a diagram of a decoding apparatus 1100. The decoding apparatus 1100 may be configured to perform the method in the foregoing embodiment. Therefore, for beneficial effect that can be achieved, refer to beneficial effect in the corresponding method provided above. Details are not described herein again.

Refer to FIG. 11. For example, the decoding apparatus 1100 may include:
a bitstream receiving module 1101, configured to receive a bitstream;
a parsing module 1102, configured to parse the bitstream to obtain second data, where the second data is a representation form in which first data is represented in a floating-point data format, and the first data is floating-point data in metadata of multimedia; and
a second data generation module 1103, configured to generate the first data based on the second data.

For example, the decoding apparatus 1100 further includes:
a second format obtaining module, configured to obtain a floating-point data format; and
the second data generation module 1103, specifically configured to process the second data based on the floating-point data format, to obtain the first data.

For example, the second format obtaining module includes the parsing module 1102, and the parsing module 1102 is further configured to parse the bitstream to obtain the floating-point data format.

For example, a second bit width obtaining module is configured to obtain a bit width of the second data.

The second data generation module 1103 is specifically configured to process the second data based on the floating-point data format and the bit width, to obtain the first data.

For example, the second bit width obtaining module includes the parsing module 1102, and the parsing module 1102 is further configured to parse the bitstream to obtain the bit width.

For example, the second data is a binary representation form or a hexadecimal representation form in which the first data is represented in the floating-point data format.

For example, the metadata of the multimedia is metadata of a high dynamic range HDR image.

For example, the metadata of the multimedia is metadata of enhanced data, and the enhanced data is determined based on a standard dynamic range SDR image and a high dynamic range HDR image.

For example, the floating-point data format includes at least one of the following: IEEE 754, FP8 (E4M3), FP8 (E5M2), Bfloat16, or TensorFloat-32.

The following describes, with reference to FIG. 12, an encoding/decoding system to which this application is applied. FIG. 12 is a block diagram of an encoding/decoding system to which an embodiment of this application is applied, for example, a video encoding/decoding system 10 (or an encoding/decoding system 10 for short) to which a technology of this application may be applied. A video encoder 20 (or an encoder 20 for short) and a video decoder 30 (or a decoder 30 for short) of the video encoding/decoding system 10 represent devices that may be configured to perform techniques based on various examples described in this application.

As shown in FIG. 12, the encoding/decoding system 10 includes a source device 12. The source device 12 is configured to provide encoded data 21 such as an encoded image to a destination device 14 for decoding the encoded data.

The source device 12 includes the encoder 20, and may optionally include an image source 16, an image preprocessor 18 (or a preprocessing unit), and a communication interface or communication unit 22.

The image source 16 may include or be any type of image capture device for capturing a real-world image and the like, and/or any type of image generation device, for example, a computer graphics processing unit for generating a computer animated image, or any type of device for obtaining and/or providing a real-world image, a computer generated image (for example, screen content, a virtual reality (virtual reality, VR) image) and/or any combination thereof (for example, an augmented reality (augmented reality, AR) image). The image source may be any type of memory or storage storing any of the foregoing images.

To distinguish processing performed by the preprocessor 18 or the preprocessing unit 18, an image or image data 17 may also be referred to as a raw image or raw image data 17.

The preprocessor 18 is configured to: receive the (raw) image data 17 and perform preprocessing on the image data 17, to obtain a preprocessed image 19 or preprocessed image data 19. For example, preprocessing performed by the preprocessor 18 may include trimming, color format conversion (for example, from RGB to YCbCr), color correction, or denoising. It may be understood that the preprocessing unit 18 may be an optional component.

The video encoder 20 is configured to: receive preprocessed image data 19 and provide encoded image data 21.

The communication interface 22 of the source device 12 may be configured to: receive the encoded image data 21 and transmit the encoded image data 21 (or any further processed version thereof) over a communication channel 13 to another device like the destination device 14 or any other device, for storage or direct reconstruction.

The destination device 14 includes the decoder 30 (for example, the video decoder 30), and may optionally include a communication interface or communication unit 28, a post-processor 32 (or post-processing unit 32), and a display device 34.

The communication interface 28 of the destination device 14 is configured to: receive the encoded image data 21 (or any further processed version thereof) directly from the source device 12 or from any other source device like a storage device, for example, the storage device is an encoded image data storage device; and provide the encoded image data 21 to the decoder 30.

The communication interface 22 and the communication interface 28 may be configured to send or receive the encoded image data 21 or encoded data over a direct communication link between the source device 12 and the destination device 14, for example, a direct wired or wireless connection, or over any type of network, for example, a wired or wireless network or any combination thereof, or any type of private and public network, or any kind of combination thereof.

For example, the communication interface 22 may be configured to: encapsulate the encoded image data 21 into an appropriate format, for example, a packet, and/or process the encoded image data through any type of transmission encoding or processing for transmission over a communication link or communication network.

The communication interface 28, corresponding to the communication interface 22, may be configured to, for example, receive transmitted data and process the transmitted data through any type of corresponding transmission decoding or processing and/or decapsulating, to obtain the encoded image data 21.

Both the communication interface 22 and communication interface 28 may be configured as unidirectional communication interfaces as indicated by an arrow for the communication channel 13 in FIG. 12 pointing from the source device 12 to the destination device 14, or bidirectional communication interfaces, and may be configured to send and receive messages and the like, to set up a connection, and acknowledge and exchange any other information related to the communication link and/or data transmission like transmission of the encoded image data.

The decoder 30 is configured to: receive the encoded image data 21, and provide decoded image data 31 or a decoded image 31.

The post-processor 32 of the destination device 14 is configured to perform post-processing on the decoded image data 31 (also referred to as reconstructed image data), for example, the decoded image 31, to obtain post-processed image data 33, for example, a post-processed image 33. Post-processing performed by the post-processing unit 32 may include, for example, color format conversion (for example, from YCbCr to RGB), color correction, trimming, or re-sampling, or any other processing, for example, for generating the decoded image data 31 displayed by the display device 34.

The display device 34 of the destination device 14 is configured to receive the post-processed image data 33 for displaying an image to a user, a viewer, or the like. The display device 34 may be or include any type of display for representing a reconstructed image, for example, an integrated or external display screen or display. For example, the display may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS) display, a digital light processor (digital light processor, DLP), or any type of other display.

Although FIG. 12 shows the source device 12 and the destination device 14 as separate devices, a device embodiment may alternatively include both the source device 12 and the destination device 14 or functions of both the source device 12 and the destination device 14, namely, the source device 12 or corresponding functions and the destination device 14 or corresponding functions. In such embodiments, the source device 12 or corresponding functions and the destination device 14 or corresponding functions may be implemented by the same hardware and/or software or by separate hardware and/or software or any combination thereof.

As will be apparent for the skilled person based on the description, existence and (exact) division into different units or functions in the source device 12 and/or the destination device 14 as shown in FIG. 12 may vary depending on an actual device and application.

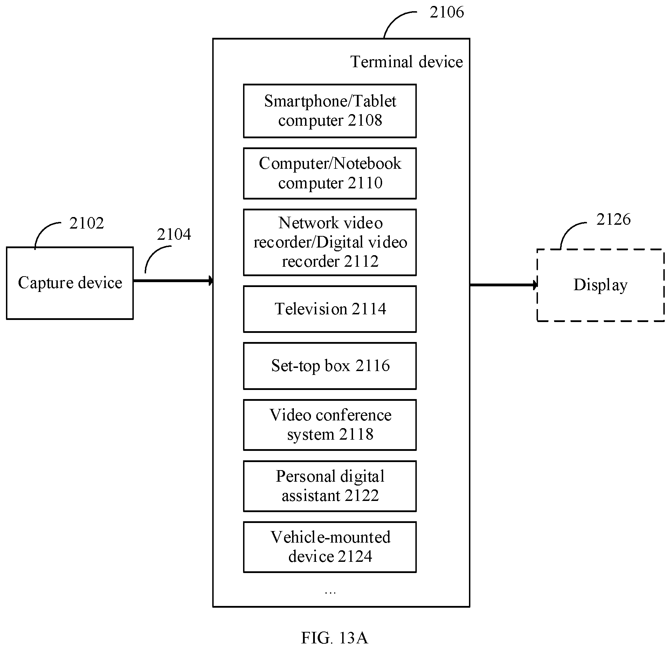

The following describes, with reference to FIG. 13A, a content supply system for a content delivery service to which this application is applied. FIG. 13A is a block diagram of a content supply system for implementing a content delivery service to which an embodiment of this application is applied. The content supply system 2100 includes a capture device 2102, a terminal device 2106, and a display 2126 (optional). The capture device 2102 communicates with the terminal device 2106 over a communication link 2104. The communication link may include the foregoing communication channel 13. The communication link 2104 includes but not limited to Wi-Fi, Ethernet, wired, wireless (3G/4G/5G), USB, or any kind of combination thereof.

The capture device 2102 generates data, and may encode the data by using the encoding method shown in the foregoing embodiment. Alternatively, the capture device 2102 may deliver the data to a streaming media server (not shown in the figure), and the server encodes the data and transmits encoded data to the terminal device 2106. The capture device 2102 includes but not limited to a camera, a smartphone or tablet computer, a computer or notebook computer, a video conference system, a PDA, a vehicle-mounted device, or any combination thereof. For example, the capture device 2102 may include the foregoing source device 12. When the data includes a video, a video encoder 20 of the capture device 2102 may actually perform video encoding processing. When the data includes an audio (namely, a voice), an audio encoder 20 of the capture device 2102 may actually perform audio encoding processing. For some practical scenarios, the capture device 2102 delivers encoded video data and encoded audio data by multiplexing the encoded video data and the encoded audio data together. For other practical scenarios, for example, in the video conference system, the encoded audio data and the encoded video data are not multiplexed. The capture device 2102 delivers the encoded audio data and the encoded video data to the terminal device 2106 separately.

The terminal device 2106 of the content supply system 2100 receives and regenerates encoded data. The terminal device 2106 may be a device with data receiving and restoring capabilities, for example, a smartphone or tablet computer 2108, a computer or laptop computer 2110, a network video recorder (network video recorder, NVR)/digital video recorder (digital video recorder, DVR) 2112, a television 2114, a set-top box (set-top box, STB) 2116, a video conference system 2118, a personal digital assistant (personal digital assistant, PDA) 2122, a vehicle-mounted device 2124, or any combination thereof, or the like capable of decoding the encoded data. For example, the terminal device 2106 may include the foregoing destination device 14. When the encoded data includes a video, the video decoder 30 of the terminal device is prioritized to perform video decoding. When the encoded data includes an audio, an audio decoder of the terminal device is prioritized to perform audio decoding processing. The terminal device 2106 may be a video play application, a streaming media play application, a streaming media play platform, a live streaming platform, or the like that runs on the terminal device.

For a terminal device with a display, for example, the smartphone or tablet computer 2108, the computer or laptop computer 2110, the NVR/DVR 2112, the television 2114, the PDA 2122, or the vehicle-mounted device 2124, the terminal device can send decoded data to the respective display. For a terminal device without a display, for example, the STB 2116 and the video conference system 3118, the device is connected to the external display 2126, to receive and display decoded data.

When each device in this system performs encoding or decoding, the image encoding device or the image decoding device, as shown in the foregoing embodiments, can be used.

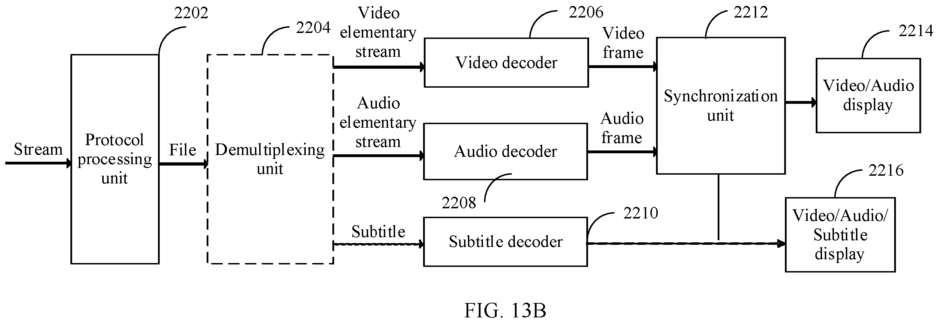

FIG. 13B is a diagram of an example structure of the terminal device 2106 in FIG. 13A. After the terminal device 2106 receives a bitstream from the capture device 2102, a protocol processing unit 2202 analyzes a transmission protocol of the bitstream. The protocol includes but is not limited to a real-time streaming protocol (Real-time Streaming Protocol, RTSP), a hypertext transfer protocol (Hypertext Transfer Protocol, HTTP), an HTTP live streaming protocol (HTTP Live streaming protocol, HLS), an MPEG dynamic adaptive streaming over HTTP (MPEG Dynamic Adaptive Streaming over HTTP, MPEG-DASH), a real-time transport protocol (Real-time Transport protocol, RTP), a real-time messaging protocol (Real-time Messaging Protocol, RTMP), or any combination thereof.

After the protocol processing unit 2202 processes the stream, a stream file is generated. The file is output to a demultiplexing unit 2204. The demultiplexing unit 2204 can separate multiplexed data into encoded audio data and encoded video data. As described above, for other practical scenarios, for example, in the video conference system, the encoded audio data and the encoded video data are not multiplexed. In this case, encoded data is transmitted to a video decoder 3206 and an audio decoder 2208 without through the demultiplexing unit 2204.

A video elementary stream (ES), an audio ES, and an optional subtitle are generated through demultiplexing processing. The video decoder 2206 that includes the video decoder 30 as described in the foregoing embodiments decodes the video ES by using on the decoding method as shown in the foregoing embodiments to generate a video frame, and sends the data to a synchronization unit 2212. The audio decoder 2208 decodes the audio ES to generate an audio frame, and sends the data to the synchronization unit 2212. Alternatively, the video frame may be stored in a buffer (not shown in the figure) before being sent to the synchronization unit 2212. Similarly, the audio frame may be stored in a buffer (not shown in the figure) before being sent to the synchronization unit 2212.

The synchronization unit 2212 synchronizes the video frame and the audio frame, and provides the video/audio to a video/audio display 3214. For example, the synchronization unit 2212 synchronizes presentation of video and audio information. The information may be encoded in syntax using time stamps related to presentation of an encoded audio and visual data and time stamps related to sending of a data stream.

If a subtitle is included in the bitstream, a subtitle decoder 2210 decodes the subtitle, and synchronizes the subtitle with the video frame and the audio frame, and provides the video/audio/subtitle to a video/audio/subtitle display 2216.

The present invention is not limited to the foregoing system, and either the image encoding device or the image decoding device in the foregoing embodiments can be used in another system like a vehicle.

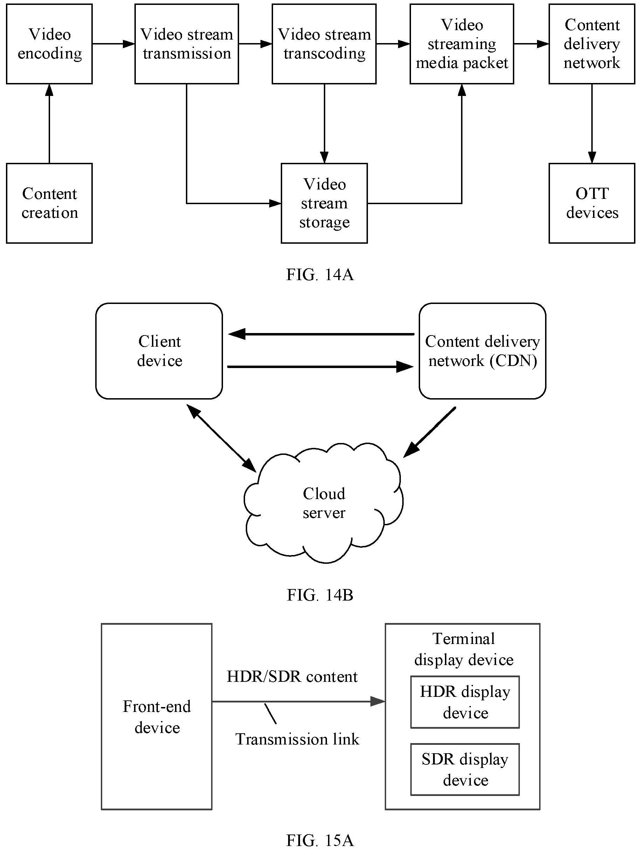

The following describes, with reference to FIG. 14A, a streaming media system to which an embodiment of this application is applicable. FIG. 14A is a diagram of an operating procedure of a streaming media system to which an embodiment of this application is applicable.

The streaming media system includes a content creation module that generates required content data, for example, a video or an audio. The streaming media system further includes a video encoding module that encodes generated content via an encoder. The streaming media system further includes a video stream transmission module that transmits an encoded video in a form of bitstream. Optionally, a format of a video stream may be converted into a bitstream format of a transport protocol commonly used by an OTT (over-the-top) device. For example, the protocol includes but is not limited to a real-time streaming protocol (Real-Time Streaming Protocol, RTSP), a hypertext transfer protocol (Hypertext Transfer Protocol, HTTP), an HTTP live streaming protocol (HTTP Live streaming protocol, HLS), an MPEG dynamic adaptive streaming over HTTP (MPEG Dynamic Adaptive Streaming over HTTP, MPEG-DASH), a real-time transport protocol (Real-time Transport protocol, RTP), a real-time messaging protocol (Real-Time Messaging Protocol, RTMP), or any combination thereof. Optionally, video stream storage may be performed to store a raw format of the video stream and/or a plurality of converted bitstream formats for ease of use. Further, the streaming media system further includes a video stream encapsulation module, configured to encapsulate the video stream to generate an encapsulated video stream. The encapsulated video stream may be referred to as a video streaming media packet. For example, the video streaming media packet may be generated based on a transcoded video stream or the stored video stream. Further, the streaming media system further includes a content delivery network (content distribution network, CDN), and the CDN is configured to deliver the video streaming media packet to a plurality of OTT devices such as mobile phones, computers, tablets, and home projectors.

It should be noted that video encoding, video stream transmission, video stream transcoding, video stream storage, video streaming media packet generation, and the content delivery network may all be implemented on a cloud server.

The following describes, with reference to FIG. 14B, an example architecture of a streaming media system in this application. The architecture of the streaming media system includes a client device, a content delivery network, and a cloud server.

A user on the client device sends a play or playback request to a cloud platform. Optionally, content of the sent request may be a title of a movie or television program to be played.

The cloud platform performs decision-making, replies to a client, and sends an address, on the CDN, of the content requested by the client to the client. Optionally, the content sent to the client may be a URL (uniform resource locator). Specifically, a playback application service on the cloud platform checks user authorization and permission, and then determines, by considering features of each client and current network conditions, which specific files are required to process the playback request. It should be noted that the content delivery network (CDN) periodically reports a running status, a learned route, and available content (file) to a cache control service on the cloud platform.

Then, the client requests, based on the address, the CDN to play the content. The CDN provides the content to the client and finally completes the request of the client.

The following describes, with reference to FIG. 15A, a system architecture to which an embodiment of this application is applicable. FIG. 15A is a diagram of a possible system architecture to which an embodiment of this application is applicable. The system architecture in this embodiment of this application includes a front-end device, a transmission link, and a terminal display device.

The front-end device is configured to capture or produce HDR/SDR content (for example, an HDR/SDR video or image).

In a possible embodiment, the front-end device may further be configured to extract corresponding metadata from the HDR content. The metadata may include global mapping information, local mapping information, and dynamic metadata and static metadata that correspond to the HDR content. The front-end device may send the HDR content and the metadata to the terminal display device over the transmission link. Specifically, the HDR content and the metadata may be transmitted in a form of data packet, or respectively transmitted in two data packets. This is not specifically limited in embodiments of this application.

Optionally, the terminal display device may be configured to: receive the metadata and the HDR content, obtain, based on the global mapping information and the local mapping information that are included in the corresponding metadata extracted from the HDR content, and information about the terminal display device, a mapping curve for global tone mapping and local tone mapping on the HDR content, convert the HDR content into display content adapted to an HDR display device or an SDR device in the terminal display device, and display the display content. It should be understood that, in different embodiments, the terminal display device may include a display device having a display capability with a lower dynamic range or a higher dynamic range than the HDR content generated by the front-end device. This is not limited in this application.

Optionally, in this application, the front-end device and the terminal display device may be independent and different physical devices. For example, the front-end device may be a video capture device, or may be a video production device. The video capture device may be a device like a video camera, a camera, or an image drawing machine. The terminal display device may be a device with a video play function, for example, virtual reality (virtual reality, VR) glasses, a mobile phone, a tablet, a television, or a projector.

Optionally, the transmission link between the front-end device and the terminal display device may be a wireless connection or a wired connection. The wireless connection may use technologies such as long term evolution (long term evolution, LTE), the 5th generation (5th generation, 5G) mobile communication, and future mobile communication. The wireless connection may further include technologies such as wireless fidelity (wireless fidelity, Wi-Fi), Bluetooth, and near field communication (Near Field Communication, NFC). The wired connection may include an Ethernet connection, a local area network connection, and the like. This is not specifically limited.

In this application, functions of the front-end device and functions of the terminal display device may alternatively be integrated into a same physical device, for example, a terminal device having a video photographing function, like a mobile phone or a tablet. In this application, a part of the functions of the front-end device and a part of the functions of the terminal display device may alternatively be integrated into a same physical device. This is not specifically limited.

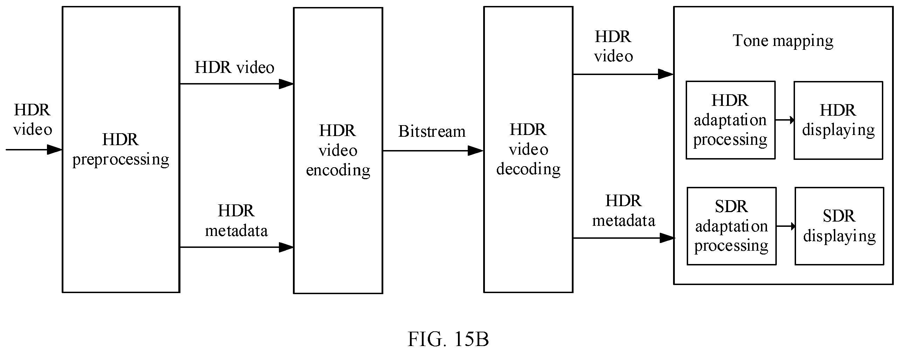

The following describes, with reference to FIG. 15B, an end-to-end image processing system according to an embodiment of this application. The system may be applied to the system architecture shown in FIG. 15A. FIG. 15B is a diagram of a structure of an image processing system according to an embodiment of this application. In FIG. 14B, for example, an HDR video is used as an example of HDR/SDR content. The image processing system includes an HDR preprocessing module, an HDR video encoding module, an HDR video decoding module, and a tone mapping module.

The HDR preprocessing module and the HDR video encoding module may be located in the front-end device shown in FIG. 15A, and the HDR video decoding module and the tone mapping module may be located in the terminal display device shown in FIG. 15A.

The HDR preprocessing module is configured to: extract dynamic metadata (for example, a maximum value, a minimum value, an average value, and a change range of luminance) from the HDR video, determine a mapping curve parameter based on the dynamic metadata and a display capability of a target display device, write the mapping curve parameter into the dynamic metadata to obtain HDR metadata, and transmit the HDR metadata. The HDR video may be captured, or may be an HDR video processed by a colorist. The display capability of the target display device is a displayable luminance range of the target display device.

The HDR video encoding module is configured to perform video encoding on the HDR video and the HDR metadata according to a video compression standard (for example, an AVS or HEVC standard) (for example, embed the HDR metadata into a user-defined part of a bitstream), to output a corresponding bitstream (an AVS or HEVC bitstream).

The HDR video decoding module is configured to: decode the generated bitstream (the AVS bitstream or the HEVC bitstream) according to a standard corresponding to a bitstream format, and output an HDR video and HDR metadata that are obtained through decoding.

The tone mapping module is configured to: generate a mapping curve based on mapping curve parameters in the HDR metadata obtained through decoding; perform tone mapping (namely, HDR adaptation or SDR adaptation) on the HDR video obtained through decoding; and send an HDR-adapted video obtained through tone mapping to an HDR display terminal for displaying, or send an SDR-adapted video to an SDR display terminal for displaying.

For example, the HDR preprocessing module may exist in a video capture device or a video production device.

For example, the HDR video encoding module may exist in the video capture device or the video production device.

For example, the HDR video decoding module may exist in a set-top box, a television display device, a mobile terminal display device, and a video conversion device like a live streaming or network video application.

For example, the tone mapping module may exist in a set-top box, a television display device, a mobile terminal display device, and a video conversion device like a live streaming or network video application. More specifically, the tone mapping module may exist in a form of chip or software program in the set-top box, the television display, or the mobile terminal display, and may exist in a form of software program in the video conversion device like the live streaming or network video application.

In a possible embodiment, when both the tone mapping module and the HDR video decoding module exist in the set-top box, the set-top box may perform functions of receiving, decoding, and tone mapping for a video bitstream. The set-top box sends, through a high-definition multimedia interface (high-definition multimedia interface, HDMI), video data obtained through decoding to a display device for displaying, so that a user can enjoy video content.

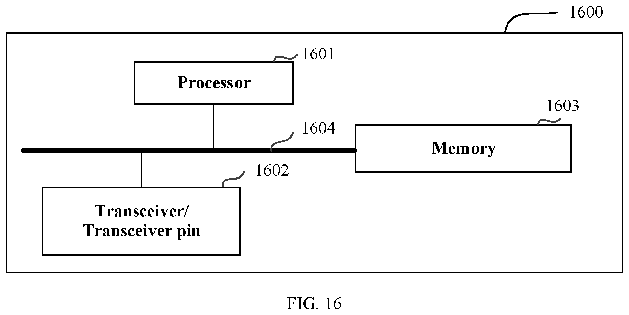

In an example, FIG. 16 is a block diagram of an apparatus 1600 according to an embodiment of this application. The apparatus 1600 may include a processor 1601 and a transceiver/transceiver pin 1602, and optionally, further includes a memory 1603.

Components of the apparatus 1600 are coupled together through a bus 1604. In addition to a data bus, the bus 1604 further includes a power bus, a control bus, and a status signal bus. However, for clarity of description, various buses in the figure are referred to as the bus 1604.

Optionally, the memory 1603 may be configured to store instructions in the foregoing method embodiments. The processor 1601 may be configured to: execute the instructions in the memory 1603, control a receive pin to receive a signal, and control a transmit pin to send a signal.

The apparatus 1600 may be the electronic device or a chip of the electronic device in the foregoing method embodiments.

For example, the electronic device in the foregoing embodiments may be a terminal device or a server.

All related content of the steps in the foregoing method embodiments may be cited in function descriptions of the corresponding functional modules. Details are not described herein again.

This application further provides a chip, including one or more interface circuits and one or more processors, where the one or more processors receive or send data via the one or more interface circuits, and when the one or more processors execute computer instructions, the foregoing related method steps are performed to implement the steps of the method in the foregoing embodiment. The interface circuit is the transceiver/transceiver pin 1602.

This application further provides a computer-readable storage medium. The computer-readable storage medium stores computer instructions. When the computer instructions are run on an electronic device, the electronic device is enabled to perform the foregoing related method steps to implement the method in the foregoing embodiment.

This application further provides a computer program product. The computer program product includes computer instructions. When the computer instructions are executed by a computer or a processor, the computer is enabled to perform the foregoing related steps to implement the method in the foregoing embodiment.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the method in the foregoing method embodiments.

The electronic device, the computer-readable storage medium, the computer program product, or the chip provided in embodiments is configured to perform the corresponding method provided above. Therefore, for beneficial effect that can be achieved, refer to beneficial effect in the corresponding method provided above. Details are not described herein.

Based on the descriptions of the implementations, a person skilled in the art may understand that for the purpose of convenient and brief description, division into the functional modules is merely used as an example for description. In actual application, the functions may be allocated to different functional modules for completion based on a requirement. In other words, an inner structure of an apparatus is divided into different functional modules, to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division. There may be another division manner in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the method described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

Methods or algorithm steps described in combination with the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information to the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in the computer-readable medium. The computer-readable medium includes a computer-readable storage medium and a communication medium, where the communication medium includes any medium that enables a computer program to be transmitted from one place to another place. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purpose of this application and the protection scope of the claims, and all the modifications shall fall within protection of this application.

## Claims

1. A method for encoding metadata of multimedia, wherein the method comprises:
obtaining metadata of multimedia, wherein the metadata of the multimedia comprises first data, and the first data is floating-point data; and
writing second data into a bitstream, wherein the second data is a representation form in which the first data is represented in a floating-point data format.

2. The method according to claim 1, wherein the method further comprises:
generating the second data based on the first data.

3. The method according to claim 2, wherein the method further comprises:
obtaining the floating-point data format; and
generating the second data based on the first data comprises:
processing the first data based on the floating-point data format, to obtain the second data.

4. The method according to claim 3, wherein the method further comprises:
obtaining a bit width of the second data; and
processing the first data based on the floating-point data format, to obtain the second data comprises:
processing the first data based on the floating-point data format and the bit width, to obtain the second data.

5. The method according to claim 4, wherein the method further comprises:
writing the bit width into the bitstream.

6. The method according to any one of claims 1 to 5, wherein the method further comprises:
writing the floating-point data format into the bitstream.

7. The method according to any one of claims 1 to 6, wherein
the second data is a binary representation form or a hexadecimal representation form in which the first data is represented in the floating-point data format.

8. The method according to any one of claims 1 to 7, wherein the metadata of the multimedia is metadata of a high dynamic range HDR image.

9. The method according to any one of claims 1 to 7, wherein the metadata of the multimedia is metadata of enhanced data, and the enhanced data is generated based on a standard dynamic range SDR image and a high dynamic range HDR image.

10. The method according to any one of claims 1 to 9, wherein the floating-point data format comprises at least one of the following: IEEE 754, FP8 (E4M3), FP8 (E5M2), Bfloat16, or TensorFloat-32.

11. A bitstream, wherein the bitstream is generated according to the method according to any one of claims 1 to 10.

12. A bitstream, wherein the bitstream comprises second data, the second data is a representation form in which first data is represented in a floating-point data format, and the first data is floating-point data in metadata of multimedia.

13. The bitstream according to claim 12, wherein the bitstream further comprises the floating-point data format.

14. The bitstream according to claim 12 or 13, wherein the second data is obtained by processing the first data based on the floating-point data format and a bit width of the second data, and the bitstream further comprises the bit width.

15. A method for decoding metadata of multimedia, wherein the method comprises:
receiving a bitstream;
parsing the bitstream to obtain second data, wherein the second data is a representation form in which first data is represented in a floating-point data format, and the first data is floating-point data in metadata of multimedia; and
generating the first data based on the second data.

16. The method according to claim 15, wherein the method further comprises:
obtaining the floating-point data format; and
generating the first data based on the second data comprises:
processing the second data based on the floating-point data format, to obtain the first data.

17. The method according to claim 16, wherein obtaining the floating-point data format comprises:
parsing the bitstream to obtain the floating-point data format.

18. The method according to claim 16 or 17, wherein the method further comprises:
obtaining a bit width of the second data; and
processing the second data based on the floating-point data format, to obtain the first data comprises:
processing the second data based on the floating-point data format and the bit width, to obtain the first data.

19. The method according to claim 18, wherein obtaining the bit width of the second data comprises:
parsing the bitstream to obtain the bit width.

20. The method according to any one of claims 15 to 19, wherein
the second data is a binary representation form or a hexadecimal representation form in which the first data is represented in the floating-point data format.

21. The method according to any one of claims 15 to 20, wherein
the metadata of the multimedia is metadata of a high dynamic range HDR image.

22. The method according to any one of claims 15 to 21, wherein the metadata of the multimedia is metadata of enhanced data, and the enhanced data is determined based on a standard dynamic range SDR image and a high dynamic range HDR image.

23. The method according to any one of claims 15 to 22, wherein the floating-point data format comprises at least one of the following: IEEE 754, FP8 (E4M3), FP8 (E5M2), Bfloat16, or TensorFloat-32.

24. An encoder, comprising:
a memory and a processor, wherein the memory is coupled to the processor; and
the memory stores program instructions, and when the program instructions are executed by the processor, the encoder is enabled to perform the method according to any one of claims 1 to 10.

25. A decoder, comprising:
a memory and a processor, wherein the memory is coupled to the processor; and
the memory stores program instructions, and when the program instructions are executed by the processor, the decoder is enabled to perform the method according to any one of claims 15 to 23.

26. A computer-readable storage medium, wherein the computer-readable storage medium stores a computer program, and when the computer program is run on a computer or a processor, the computer or the processor is enabled to perform the method according to any one of claims 1 to 10 or perform the method according to any one of claims 15 to 23.

27. A computer program product, wherein the computer program product comprises computer instructions; and when the computer instructions are executed by a computer or a processor, steps of the method according to any one of claims 1 to 10 are performed, or steps of the method according to any one of claims 15 to 23 are performed.

28. A computer-readable storage medium, wherein the computer-readable storage medium stores the bitstream according to any one of claims 11 to 14.
